# EUROPEAN PATENT SPECIFICATION

(11) **EP 1 524 542 B1**
(45) Date of publication and mention of the grant of the patent: **02.07.2008**
(21) Application number: 04024276.0
(22) Date of filing: 12.10.2004
(51) Int. Cl.: G02B 21/26, A61B 1/313, G02B 23/24

(54) **Objective lens insertion tool & objective optical system attachment device**
Objektiveinführvorrichtung, Befestigungsvorrichtung für ein Objektivsystem
Outil d'insertion d'une lentille d'objectif et dispositif de fixation pour un système d'objectif optique

(30) Priority: 17.10.2003 JP 2003357577; 23.10.2003 JP 2003363501; 15.03.2004 JP 2004072236
(43) Date of publication of application: 20.04.2005
(73) Proprietor: Olympus Corporation, Tokyo 151-0072 (JP)
(72) Inventor: Tokuda, Kazunari, Hachioji-shi, Tokyo 193-0834 (JP); Horii, Akihiro, Hachioji-shi, Tokyo 193-0931 (JP); Kumada, Yoshiyuki, Suginami-ku, Tokyo 167-0042 (JP); Hara, Mitsuhiro, Musashino-shi, Tokyo 180-0023 (JP); Hirata, Tadashi, Hachioji-shi, Tokyo 193-0842 (JP); Fukuyama, Hiroya, Machida-shi, Tokyo 194-0211 (JP)
(74) Representative: von Hellfeld, Axel

(56) References cited:
- US-A- 4 873 976
- US-A- 5 431 151
- US-A- 5 841 576
- US-A- 5 976 075
- US-A1- 2003 011 883
- US-A1- 2003 135 091
- PATENT ABSTRACTS OF JAPAN vol. 017, no. 655 (C-1136), 6 December 1993 (1993-12-06) & JP 05 211985 A (OLYMPUS OPTICAL CO LTD), 24 August 1993 (1993-08-24)

## Description

### BACKGROUND OF THE INVENTION

### 1. FIELD OF THE INVENTION

The present invention relates to an objective lens unit disposed at the subject side in an optical apparatus, to a microscope provided with such an objective lens units, and to a microscope system including such microscopes.

### 2. DESCRIPTION OF RELATED ART

Conventionally, a confocal laser-scanning microscope is a known apparatus for obtaining surface and tomographic images of samples of living cells and tissue in order to observe cellular function or the like, by illuminating a sample of a living body with excitation light from the surface thereof and by selectively detecting fluorescence emitted from a location at a predetermined depth in the sample (see, for example, Japanese Unexamined Patent Application Publication No. HEI 3-87804 (page 2, etc. therein) and Japanese Unexamined Patent Application Publication No. HEI 5-72481 (Fig. 1, etc. therein)). In a confocal laser-scanning microscope, a laser light source and an optical detector are disposed so as to have an optically conjugated positional relationship with respect to an objective lens. Furthermore, a scanning optical system is provided between the laser light source and the objective lens, and images of the sample are obtained while two-dimensionally or three-dimensionally scanning the laser beam over the sample.

In addition to standard microscope observation, by scanning the laser light, which is focused to a minute spot region on the sample, using scanning means such as a galvano mirror, this confocal laser-scanning fluorescence microscope detects fluorescence emitted from the sample to obtain images.

Since this confocal laser-scanning microscope can therefore eliminate light other than that from the minute spot being examined due to its excellent resolving power, it has the advantage of being able to obtain detailed examination images with a high signal-to-noise (S/N) ratio.

Moreover, in conventional confocal laser-scanning microscopes, there are devices for optically connecting the scanning optical system and the objective lens, which is adjacent to the site being examined, using a fiber bundle (see, for example, Japanese Unexamined Patent Application Publication No. HEI 11-133306, paragraphs 0012 to 0015 and Fig. 1 therein).

However, when examining the same sample a plurality of times with these types of confocal laser-scanning microscope, the sample and the objective lens must be aligned for each examination. In cases where the sample is tissue or the like of a small animal, such alignment is particularly difficult.

Alignment must also be carried out when the magnification of the objective lens is changed.

Also, when examining a cell or the like a plurality of times, it is essential that foreign objects do not get into the subject under examination.

Furthermore, microscopes including conventional confocal laser-scanning microscopes are not designed for in vivo examination of various organs of small experimental animals, such as rats and mice. Therefore, in cases where vibration occurs due to the pulsation of blood vessels or the like, there are conceivably disadvantages such as images of the subject site under examination becoming blurred or the focal point becoming out of focus as a result of movement in the relative positions of the examination site of the subject and the objective optical system disposed adjacent to the examination site of the subject.

In particular, to carry out time-lapse examination, in order to allow the small experimental animal or the like to behave like normal during examination, the alignment state of the objective optical system must be temporarily released. In such a case, it is extremely difficult to re-align the objective optical system at the site of the subject under examination. Moreover, when the objective optical system repeatedly comes into and out of contact with the site of the subject being examined, the site of the subject being examined may be damaged, and it may not be possible to continue to reliably carry out examination of the site of the subject under examination.

United States Patent No. 5,976,075 describes a cannula mount for holding an imaging assembly with a patient. The cannula mount is inserted into the wall of the chest cavity during a thoracoscopic procedure and the imaging assembly is then inserted into the cannula mount.

United States Published Patent Application No. 2003/0135091 A1 and Japanese Published Patent Application No. 05-211985 both illustrate examples of endoscope guide devices for mounting to a patients' body and securely guiding an endoscope therethrough to a surgical target within the body.

United Kingdom Patent Application GB 2,353,369 A describes a head unit for endoscopes and endomicroscopes with which tissue under examination is deformed under suction so as to emit light away from the head unit during the examination.

### BRIEF SUMMARY OF THE INVENTION

In light of the above problems, it is an object of the present invention to make it unnecessary to align an objective lens, which normally must be carried out for each examination. It is also an object of the present invention to provide a microscope to which such an objective lens unit is attached and a microscope system including this microscope.

It is a further object of the present invention to prevent the intrusion of foreign objects into the subject under examination, and to provide a microscope to which such an objective lens unit is attached and a microscope system including such a microscope.

It is yet a further object of the present invention to provide an objective optical system fixing device with which it is possible to carry out in vivo examination, for a relatively long period of time, of tissue such as cells, muscles, etc. or individual organs such as the heart, liver, etc. of mammals, especially small experimental animals.

In order to accomplish the objects described above, the present invention provides an objective lens unit having the features recited in claim 1, as well as a microscope incorporating such an objective lens unit, and a microscope system incorporating such a microscope.

Thus, the present invention provides a microscope system including an objective optical system unit, and a structure or member for fixing the objective optical system unit to a living body.

According to this aspect of the invention, the objective optical system unit can be positioned and fixed with respect to the subject under examination. Therefore, when repeatedly carrying out examination of animal tissue or the like, it is not necessary to perform positioning of the objective lens for each examination.

In the aspect of the invention described above, an objective optical system unit fixing member may be provided between the objective optical system unit and the living body.

Accordingly, even if examinations are carried out over a relatively long period of time, it is not necessary to perform positioning of the objective lens for each examination.

The objective optical system unit described above can be an objective lens unit configured so as to hold at least one lens in a frame part, the objective lens unit including, on the frame part, a contact surface making close contact with the subject under examination, and a fixing device for fixing the frame part to the subject under examination.

This objective lens unit can be directly placed in close contact with the subject under examination, and can be fixed at that location by a certain fixing device. Therefore, even if examination is carried out a plurality of times, since the examination position does not shift, a particular site of the subject under examination can be irradiated with light.

Furthermore, the present invention provides a microscope including the objective lens unit described above, a light source for radiating light onto the subject under examination, and a photo-detector for detecting light obtained from light radiating from the light source onto the subject under examination.

This microscope radiates light via the objective lens unit fixed to the subject under examination, and obtains images of a particular site of the subject under examination. The light obtained by illuminating the subject under examination using a laser oscillator or a lamp in the light source may be reflected light or fluorescence, in the case where the subject under examination is dyed with a fluorescent dye. Also, the microscope may be a confocal laser-scanning microscope, but it need not be a confocal laser-scanning microscope. With this microscope, since the objective lens unit is fixed to the subject under examination and thus the examination position does not change even when carrying out examination repeatedly, accurate examination of the subject can be carried out.

Furthermore, the present invention is advantageous in that, since the objective optical system unit can be kept stably positioned with respect to the examination site of the subject, in vivo examination of the tissue can be easily carried out over a comparatively long period of time.

### BRIEF DESCRIPTION OF THE SEVERAL VIEWS OF THE DRAWINGS

Fig. 1 shows the configuration of a microscope system according to an embodiment of the present invention.
Fig. 2 is a schematic structural diagram of a microscope to which an objective lens unit is attached.
Fig. 3 is a cross-sectional view showing the configuration of the objective lens unit.
Fig. 4 is a cross-sectional view taken along line A-A in Fig. 3.
Fig. 5 is a diagram for describing a state in which the subject under examination is sucked by an objective lens unit.
Fig. 6 is a cross-sectional view showing the configuration of an objective lens unit according to a second embodiment of the invention.
Fig. 7 is a view for describing a state in which the subject under examination is sucked by an objective lens unit.
Fig. 8 is a cross-sectional view showing the configuration of an objective lens unit.
Fig. 9 is a plan view of an objective lens unit.
Fig. 10 is a perspective view of an objective lens unit.
Fig. 11 is a diagram showing the configuration of a microscope system according to a comparative example not forming part of the present invention.
Fig. 12 is a schematic structural diagram of a microscope including an objective lens unit and an objective lens insertion tool.
Fig. 13 is a cross-sectional view showing a state in which an objective lens unit is fixed to a subject under examination.
Fig. 14 is a schematic structural diagram of a microscope including an objective lens unit and an objective lens insertion tool.
Fig. 15 is a cross-sectional view of an objective lens.
Fig. 16 is a cross-sectional view showing a state in which an objective lens is fixed to a subject under examination.
Fig. 17 is a cross-sectional view showing a state in which an objective lens unit is fixed to a subject under examination.
Fig. 18 is a cross-secdonal view of an objective lens insertion tool.
Fig. 19 is a plan view of an objective lens insertion tool.
Fig. 20 is a cross-sectional view showing a state in which an objective lens unit is fixed to a subject under examination.
Fig. 21 is a cross-sectional view showing a state in which an objective lens unit is fixed to a subject under examination.
Fig. 22 is a cross-sectional view showing a state in which an objective lens unit is fixed to a subject under examination.
Fig. 23 is a cross-sectional view showing a state in which an objective lens unit is fixed to a subject under examination.
Fig. 24 is a cross-sectional view showing a state in which an objective lens unit is fixed to a subject under examination.
Fig. 25 is a diagram showing an example of an objective lens insertion tool.
Fig. 26 is a schematic structural diagram of a microscope including an objective lens unit and an objective lens insertion tool.
Fig. 27 is a schematic structural diagram of a microscope including an objective lens unit and an objective lens insertion tool.
Fig. 28 is vertical sectional view showing an objective optical system fixing device according to another comparative example not forming part of the present invention.
Fig. 29 is a perspective view showing the fixing device of Fig. 28.
Fig. 30 is a perspective view showing an objective optical system fixing device according to a further comparative example not forming part of the present invention.
Fig. 31 is a side view showing a subject under examination, wherein the fixing device of Fig. 30 is attached to a small experimental animal.
Fig. 32 is a plan view showing the subject under examination.
Fig. 33 is a partially cut-away front view showing a modification of the fixing device in Fig 30.
Fig. 34 is a partially cut-away side view showing an objective optical system fixing device according to yet another comparative example not forming part of the present invention.
Fig. 35 is a vertical sectional view showing a support member of the fixing device in Fig. 34.
Fig. 36 is a vertical sectional view showing a modification of the support member in Fig. 35.
Fig. 37 is a vertical sectional view showing another modification of the support member in Fig. 35.
Fig. 38 is a vertical sectional view showing another modification of the support member in Fig. 35.
Fig. 39 is a vertical sectional view showing yet another modification of the support member in Fig. 35.
Fig. 40 is a partially cut-away side view showing an objective optical system fixing device according to a further comparative example not forming part of the present invention.
Fig. 41 is a perspective view showing the fixing device in Fig. 40.
Fig. 42 is a partially cut-away side view showing a modification of the fixing device in Fig. 40.
Fig. 43 is a partially cut-away side view showing another modification of the fixing device in Fig. 40.
Fig. 44 is a partially cut-away side view showing yet another modification of the fixing device in Fig. 40.
Fig. 45 is a perspective view showing the fixing device in Fig. 44.
Fig. 46 is a perspective view showing an objective optical system fixing device according to still a further comparative example not forming part of the present invention.
Fig. 47 is a partially cut-away side view showing a microscope body directly fixed to an animal securing stage in Fig. 46.

### DETAILED DESCRIPTION OF THE INVENTION

Preferred embodiments of the present invention and comparative examples not forming part of the present invention will be described in more detail with reference to the drawings.

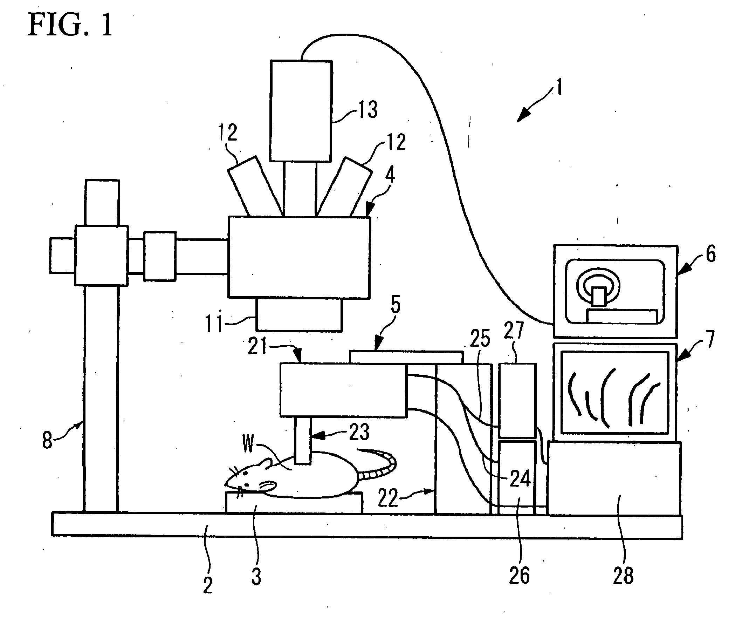

Fig. 1 shows the schematic configuration of a microscope system according to a first embodiment of the present invention.

As shown in Fig. 1, a microscope system 1 includes a stage 3 on a platform 2, and above the stage 3, a binocular stereo microscope 4 for observing an upright image of a subject W over a relatively wide field of view is provided. Between the stage 3 and the binocular stereo microscope 4, a microscope 5 (hereinafter referred to as a micro microscope) for observing the subject W at a relatively high magnification is provided in a freely movable manner.

The binocular stereo microscope 4 has an objective lens 11 and eyepieces 12 attached thereto, and inside, an ocular lens, an image-forming lens, etc. (not shown in the drawing) are disposed. Two eyepieces 12 are provided, one for each of the left and right eyes, and the optical axes of the individual eyepieces 12 are adjusted so as to be coincident at the surface of the subject W under examination. Furthermore, a CCD (Charge Coupled Device) camera 13, which is connected to a monitor 6, is attached to this binocular stereo microscope 4. The CCD camera 13 and the monitor 6, however, are not essential to the configuration of the binocular stereo microscope.

This binocular stereo microscope 4 is supported by a mulb-axis arm 8. The multi-axis arm 8 moves the binocular stereo microscope 4 horizontally with respect to the subject W under examination, and moves closer to or away from the subject W. Also, a space for inserting a head portion 21 of the micro microscope 5 is arranged between the objective lens 11 and the subject W under examination.

In the micro microscope 5, the head unit 21 containing the optical system is supported by a multi-axis stage 22, which is a multi-axis motion mechanism. The objective lens unit 22 is attached to the lower surface of the head portion 21. Also, a light source 26 and an optical detector 27 are connected to the head portion 21 via optical fibers 24 and 25, and a controller 28 for controlling the individual units and the monitor 7 for displaying images examination images are also provided.

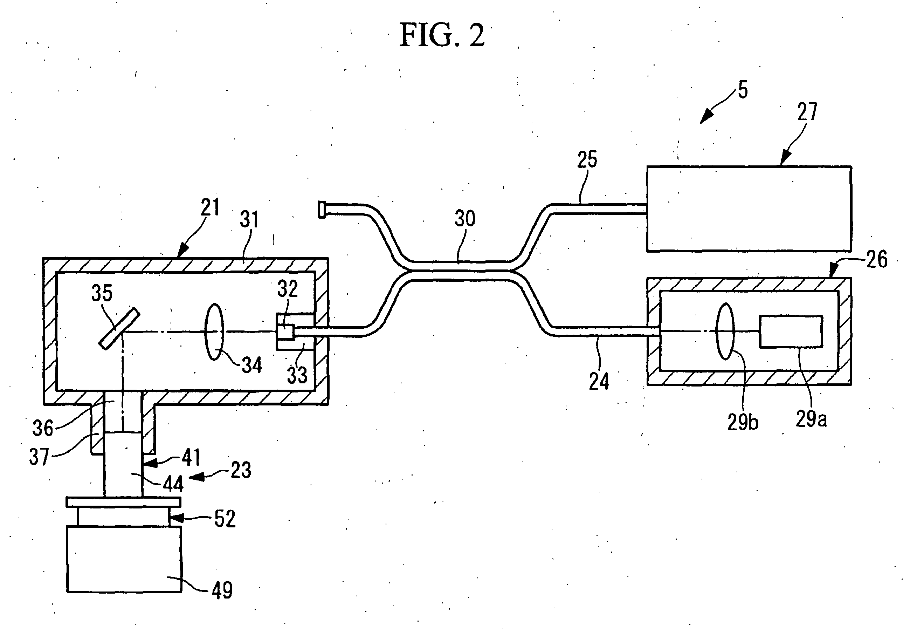

In the light source 26, a laser oscillator 29a, for example, an argon-ion laser or a helium-neon laser, is used. As shown in Fig. 2, a focusing lens 29b and one end of the optical fiber 24 are disposed, in this order, in the light path of the laser beam emitted from the light source 26, and the laser beam focused by the focusing lens 29b is launched into the optical fiber 24.

One end of the optical fiber 24 is connected to the light source 26 and the other end is connected to the head unit 21. This optical fiber 24 is connected to the optical fiber 25, which is connected to the optical detector 27, at an intermediate part extending from one end to the other end thereof via an optical fiber coupler 30. One end of this optical fiber 25 is connected to the optical detector 27.

A photomultiplier, a PD (photodiode), or a CCD camera, for example, is used in the optical detector 27. The light entering this optical detector 27 is reflected light or fluorescence light from the light illuminating the subject W from the light source 26, after being split off from the optical fiber coupler 30.

In a case 31 of the head unit 21, a retaining part 33 for retaining a connector 32 attached to the other end of the optical fiber 24 is provided. Also, a collimator lens 34 and an optical scanner 35 are disposed, in this order, in the light path of the laser beam emerging from the optical fiber 24. The optical scanner 35 is a two-dimensional laser beam scanner formed of a combination of, for example, a galvano mirror that scans the laser beam in the X-direction (the lateral direction of the subject W under examination) and a galvano mirror that scans in the Y-direction (the longitudinal direction of the subject W under examination). Also, at the lower face of the case 31, at a position beneath the optical scanner 35, a window 36 through which the laser beam passes is provided. The edges of the window 36 extend downward to provide a mounting part 37 for fixing the objective lens unit 23. An attachment groove, threaded groove, or the like is formed inside this mounting part 37 so as to allow attachment of the objective lens unit 23 while it is fixed to the subject under examination.

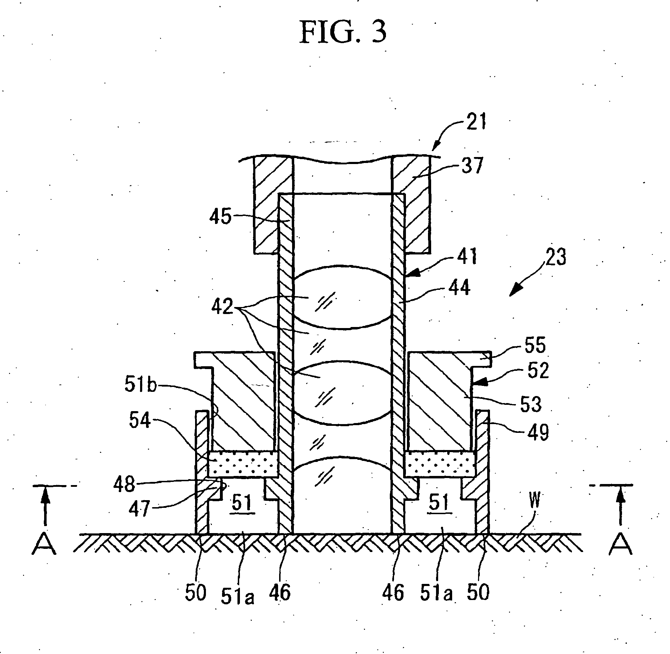

As shown in Fig. 3, the objective lens unit 23 has a frame part 41 which is attached to the head unit 21. Objective lenses 42 composed of a plurality of lenses is held inside the frame part 41. A plurality of the objective lens units 23 composed of different objective lenses 42 are used, depending on the image magnification ratio of the subject under examination.

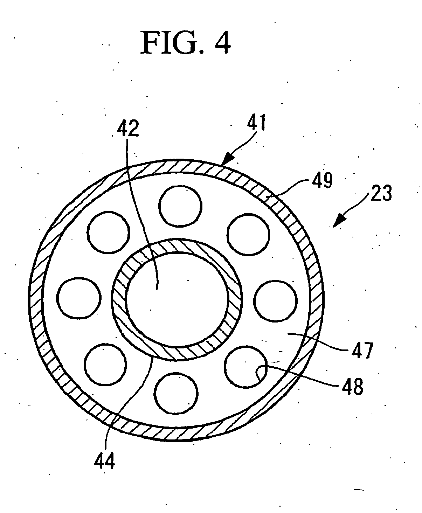

As shown in Fig. 3 and Fig. 4, the frame part 41 has an inner frame 44, with a substantially circular cross-section, for holding the objective lenses 42. At the upper part of the inner frame 44, a detachable mounting part 45 is attached to the mounting part 37 of the head unit 21, and a contact surface 46 making close contact with the subject under examination W is provided at the lower part of the frame part 41.

Also, a substantially ring-shaped extension 47, which is made to protrude towards the outer side in the radial direction of the inner frame 44 from one part thereof, is provided at the lower part of the inner frame 44. A plurality of air vents 48 penetrating the extension 47 in the vertical direction are formed in this extension 47 at regular intervals. The outer edge of the extension 47 is continuous with an outer frame 49, which is provided concentrically with respect to the inner frame 44. The outer frame 49 is provided so as to enclose the circumference of the inner frame 44, and, at the lower part thereof, a contact surface 50 making close contact with the subject under examination W is provided. The contact surface 50 is formed in the same plane as the contact surface 46 of the inner frame 44. The length (height) of the outer frame 49 is shorter than that of the inner frame 44, and the top of the outer frame 49 is positioned below the top of the inner frame 44.

Here, a circular slot 51 is formed between the inner frame 44 and the outer frame 49. As shown in Fig. 3, this circular slot 51 has an opening 51a at the side of the contact surfaces 46 and 50, and an opening 51b at the upper end of the outer frame 49. A piston 52 is inserted into the circular slot 51 from the opening 51b. As a result, the circular slot 51 constitutes a cylinder for holding the piston 52 in such a manner that it is slidable towards the subject under examination W.

The piston 52 has a main body 53 whose inner diameter is approximately equal to the outer diameter of the inner frame 44 and whose outer diameter is approximately equal to the inner diameter of the outer frame 49. An airtight member 54, such as a rubber member, in close contact with both the inner frame 44 and the outer frame 49, is fixed to the lower end of the main body 53.

The piston 52 is capable of reciprocating motion along the inner frame 44 and the outer frame 49 from an inserted position where the airtight member 54 is in contact with the extension 47 to a retracted position where the airtight member 54 is pulled out to a point close to the upper end of the outer frame 49, while maintaining the airtightness of the circular slot 51. In addition, at the top of the piston 52, an overhanging part 55, which protrudes outwards in the radial direction of the inner frame 44, is provided around the circumference of the piston 52. Grasping this overhanging part 55 with the fingers or a tool allows the piston 52 to be easily reciprocated.

Here, the frames 44 and 49 and the airtight member 54 are made of airtight parts, and the frames 44 and 49, the extension 47, and the piston 52 thus form a suction apparatus (fixing device).

As shown in Fig. 1, the controller 28 of the micro microscope 5 is connected to the head unit 21 (including the multi-axis stage 22), the light source 26, the optical detector 27, and the monitor 7 for the micro microscope 5 by cables. For example, for the light source 26, ON/OFF control and output control of the laser beam are performed; for the head unit 21, feedback control of the optical scanner 35 (see Fig. 2) is performed; and detection signals are obtained from the optical detector 27, subjected to data processing, and displayed on the monitor 7. In addition, when carrying out three-dimensional examination with the micro microscope 5, the collimator lens 34 is moved towards and away from the optical scanner 35.

Furthermore, the multi-axis stage 22 is formed of a combination of motorized stages that translate the head unit 21 in the back-and-forth, left-and-right, and up-and-down directions.

Next, a description is given below of one example of the procedure for examining a subject W using this microscope system 1.

First, as shown in Fig. 1, the subject W to be examined is placed on the stage 3 beneath the field of view of the binocular stereo microscope 4. At this time, the multi-axis stage 22 is operated by the controller 28 to retract the head unit 21 of the micro microscope 5 to a position where it does not obstruct examination with the binocular stereo microscope 4. If the head unit 21 is not attached to the multi-axis stage 22, in this step, the head unit 21 is mounted to the multi-axis stage 22. Also, as shown in Fig. 3, the airtight member 52 is pushed in to a position where it makes contact with the extension 47.

Then, while checking the part to be examined (the examination site) with the binocular stereo microscope 4, the skin of the subject W under examination is cut open. At this time, the examination site may be dyed with a fluorescent dye, if necessary.

When the preparations up to this point have been completed, the multi-axis stage 22 is operated again with the controller 28 to move the head unit 21 of the micro microscope 5 over the examination site. Positioning of the head unit 21, that is to say, the tip of the objective lens unit 23, is carried out while checking the binocular stereo microscope 4 or the monitor 6. Fig. 1 shows an example in which an image of the subject under examination, whose skin has been cut open, as well as the head unit 21 and the objective lens unit 23, is shown on the monitor 6.

Then, the head unit 21 is lowered so that the contact surfaces 46 and 50 (see Fig. 3) of the objective lens unit 23, which is fixed to the head unit 21, make contact with the subject W under examination.

As shown in Fig. 3, when the contact surfaces 46 and 50 of the objective lens unit 23 and the subject W under examination make contact, the openings 51a, delimited by the contact surface 46 and the contact surface 50, become plugged by the area surrounding the examination site, and the circular slot 51 is sealed off by the subject W under examination, the frames 44 and 49, the extension 47, and the piston 52 (airtight member 54).

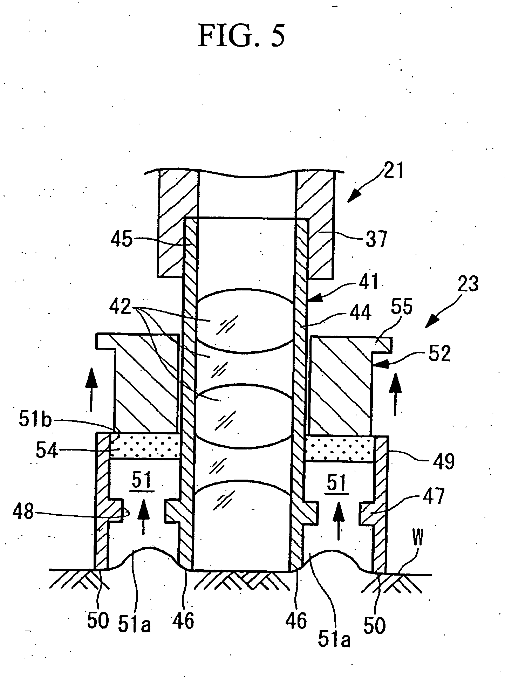

In this state, the sides of the piston 52 or the overhanging part 55 are gripped with the fingers, forceps, or the like, and, as shown by the arrows in Fig. 5, the piston 52 is raised towards the head unit 21 along the frames 44 and 49. Then, the extension 47 and the airtight member 54 separate, and the volume of the circular slot 51 increases by that amount. As a result, the pressure in the interior of the circular slot 51 is reduced, forming a negative pressure. Since the frames 44 and 49 and the main body 53 of the piston 52, to which the airtight member 54 is fixed, are not deformed by this level of negative pressure, the subject W under examination, which is relatively flexible, is deformed by stretching and is thus sucked into the piston 52. As a result, the subject under examination W is fixed to the objective lens unit 23, and displacement between the objective lens unit 23 and the subject W under examination is prevented until the piston 52 is pushed back in again.

When the objective lens unit 23 is positioned and fixed to the subject W under examination, the controller 28 is operated to emit a laser beam. As shown in Fig. 2, the laser beam passes through the focusing lens 29b, is launched into the optical fiber 24, and is guided to the interior of the head unit 21. In the head unit 21, the laser beam is scanned by the optical scanner 35, is focused by the collimator lens 34 and the objective lenses 42, and illuminates a predetermined position of the subject W under examination. Then, the light reflected from the subject W under examination or fluorescence emitted from the fluorescent dye returns to the optical fiber 24 via the same optical system. As mentioned above, since the optical fiber 24 has the optical fiber coupler 30 disposed in the middle thereof, the reflected light or fluorescence light is split off into the optical fiber 25 and is detected by the optical detector 27. Then, the optical detector 27 outputs an electrical signal to the controller 28 in accordance with the light intensity.

Only information on the region the laser beam illuminates is contained in the signal that the optical detector outputs. Therefore, the controller 28 obtains information on the predetermined area scanned by the laser beam, carries out image processing, and outputs it on the monitor 7. The image displayed on the monitor 7 can be output onto a paper medium or recorded on a magnetic recording medium, as required.

Since, the laser beam can easily penetrate the subject W under examination with a shallow depth of focus, if the position of the focal point is displaced up or down by the collimator lens 34 (see Fig. 2) and so on, an image of the interior of the subject W under examination can be obtained, thus allowing three-dimensional examination of the examination site.

Then, when examining changes in the subject W under examination over time, it can be left in that state or the objective lens unit 23 can be removed from the head unit 21. In the latter case, when re-examining the subject W, the objective lens unit 23 is re-attached to the head unit 21 and examination is carried out.

Moreover, when examination is completely finished and the objective lens unit 23 is to be removed from the subject W under examination, the piston 52 of the objective lens unit 23 shown in Fig. 5 is pushed in towards the subject W under examination, and the airtight member 54 and the extension 47 come into close contact. As a result, the space inside the circular slot 51 returns to the same volume as at suction time. Therefore, the pressure in the circular slot 51 returns to a high pressure, and suction of the subject W under examination is stopped. In this state, if the head unit 21 is raised using the multi-axis stage 22, the objective lens unit 23 is removed from the subject W under examination. Then, to examine another site of the same subject W or to examine another subject W, the procedure described above is repeated.

According to this embodiment, a fixing device (suction device) for fixing the objective lens unit 23 to the subject W under examination is formed by sucking the subject W under examination with the objective lens unit 23. Therefore, it is possible to position and fix the objective lenses 42 and the subject W under examination. Accordingly, when examining changes in the examination site over time, it is not necessary to align the subject W under examination and the objective lens unit 23 for each examination.

Also, since the tip (contact surfaces 46 and 50) of the objective lens unit 23 is fixed to the subject W under examination, positioning of the objective lens in the depth direction (height, Z-direction) is carried out.

Furthermore, since the objective lens unit 23 is fixed so as to surround the examination site, it is difficult for foreign objects to enter the subject W under examination, and in vivo examination of subjects W such as animals can be carried out.

In addition, since the micro microscope 5, to which this type of objective lens unit 23 is attached, can be fixed to a predetermined position of the objective lenses 42, accurate two-dimensional examination or three-dimensional examination of the subject can be carried out, and it is also possible to carry out examination over an extended period of time.

Since the microscope system 1 including this kind of micro microscope 5 can fix the objective lens unit 23 to the subject W under examination while checking the examination position with the binocular stereo microscope 4, accurate two-dimensional examination or three-dimensional examination of the subject W can be carried out, and it is also possible to carry out examination over an extended period of time.

In this embodiment, the extension 47 acts to join the inner frame 44 and the outer frame 49, and also functions as a stopper when pushing in the piston 52; however, an objective lens unit 23 having no extension 47 can also be used. More concretely, the outer frame 49 may be decentered with respect to the inner frame 44, and the inner frame 44 and part of the outer frame 49 may be in close contact. Also, instead of the circular slot 51 shown in Fig. 3 and Fig. 4, a cylinder may be formed from a through-hole formed by cutting out a circular, polygonal, or ring-shaped piece in cross-sectional view. That is to say, any shape is acceptable as long as the frame part 41 is configured so as to have a hole for holding the objective lenses 42 and a through-hole in which the piston 52 can be inserted. In this case, the piston 52 has a shape matching the through-hole. In light of the fact that deviation between the objective lens unit 23 and the subject W under examination can be prevented, it is preferable that a plurality of through-holes be provided or the opening at the contact surface side have a predetermined area or larger. In the case where a plurality of through-holes are provided, a plurality of pistons 52 are also inserted; however, a structure having a plurality of openings at the contact surface for a single piston 52 is also acceptable.

Next, a second embodiment of the present invention will be described with reference to the drawings. Elements with the same configuration as in the first embodiment are given the same reference numerals, and any description duplicating that in the first embodiment is omitted.

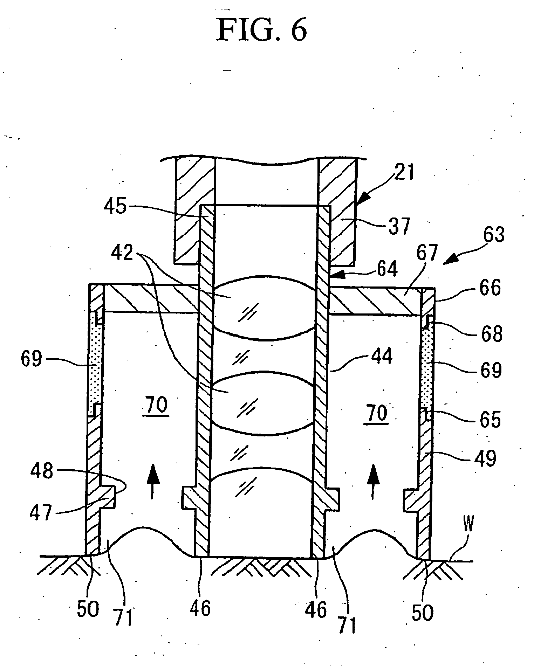

The microscope system 1 according to this embodiment is characterized in that an objective lens unit 63 shown in Fig. 6 is attached to the micro microscope 5. Here, Fig. 6 shows the objective lens unit 63 fixed to the subject W under examination.

As shown in Fig. 6, a frame part 64 of the objective lens unit 63 has the inner frame 44 in which objective lenses 42 composed of a plurality of lenses is contained, and a mounting part 45 for attaching to the head unit 21 is formed at the top of the inner frame 44. In the vicinity of a contact surface 46 of the inner frame 44, there is a substantially circular extension 47, and the outer edge of the extension 47 is continuous with an outer frame 49. The outer frame 49, surrounds the inner frame 44, and, in cross-section, the inner frame 44 and the outer frame 49 are disposed substantially concentrically. The outer frame 49 is thinner than the inner frame 44, but a contact surface 50 of the outer frame 49 is formed in substantially the same plane as the contact surface 46 of the inner frame 44. At the top of the outer frame 49, a stepped portion 65 that is reduced in thickness from the outer side is formed around the circumference thereof.

At a predetermined distance above the outer frame 49 (at the head unit 21 side), a short frame 66 whose length in the vertical direction is small is fixed to the inner frame 44 by a coupling ring 67. The short frame 66 has an inner diameter and an outer diameter substantially equal to the outer frame 49, and a stepped portion 68 that is reduced in thickness from the outer side is formed around the circumference thereof at the lower end. The inner edge of the coupling ring 67 is substantially the same as the outer diameter of the inner frame 44, and the outer edge is substantially the same as the inner diameter of the short frame 66.

The upper and lower ends of a circular resilient member 69 are respectively fixed to a stepped portion 65 of the outer frame 49 and the stepped portion 68 of the short frame 66. The frames 44, 49, and 66, the coupling ring 67, and the resilient member 69 are made of airtight parts, and are in close contact with each other so as to ensure airtightness also at the locations where they are joined. As a result, in the frame part 64, there is an opening 71 in the plane defined by the contact surfaces 46 and 50, and a concave section 70 defined by the frames 44, 49 and 66, the coupling ring 67, and the resilient member 69 is formed.

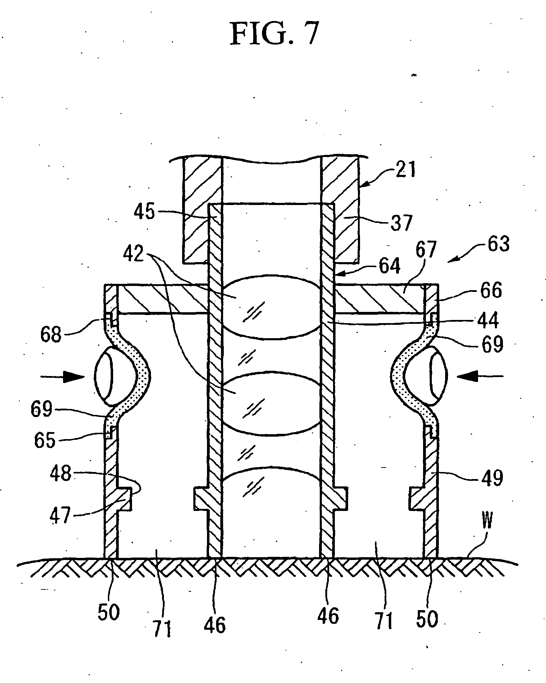

The resilient member 69, is preferably deformable in the direction towards the inner frame 44 by an external pressure. As shown in Fig. 7, when the resilient member 69 is pressed towards the inner frame 44, the volume of the concave section 70 formed by the frames 44, 49, and 66, the coupling ring 67, and the resilient member 69 is reduced.

A description will now be given of the examination procedure using this microscope system 1. The procedure for positioning the objective lens unit 63 while carrying out examination with the binocular stereo microscope 4 is the same as in the first embodiment.

After positioning the objective lens unit 63, the resilient member 69 of the objective lens unit 63 is pressed so as to be deformed in the direction that reduces the diameter with the fingers or forceps, and the volume of the concave section 70 is reduced (refer to Fig. 7). Then, in this state, the multi-axis stage 22 is operated to lower the head unit 21.

When the end (the contact surfaces 46 and 50) of the objective lens unit 63 is in close contact with the subject W under examination, lowering of the head unit 21 is stopped, and the fingers or the like are removed from the resilient member 69. As a result, the outer surface of the resilient member 69 returns to substantially the same position as the outer walls of the outer frame 49 and the short frame 66, and the volume of the concave section 70 increases. Then, since the concave section 70 at the inside is sealed by the objective lens unit 63 and the subject W under examination, a low pressure occurs. Therefore, the vicinity of the site of the subject W to be examined is sucked into the objective lens unit 63, and the objective lens unit 63 thus becomes fixed to the subject W under examination.

Then, when two-dimensional examination or three-dimensional examination of the subject W is completed, the resilient member 69 is pressed again in the diameter-reducing direction with the fingers or the like. The volume of the concave section 70 then becomes the same as the volume when the objective lens unit 63 was in close contact with the subject W under examination, and the internal pressure thereof increases. As a result, since the pressure sucking the subject W under examination becomes lower, if the head unit 21 is raised in this state, the objective lens unit 63 can be raised away from the subject W under examination.

According to this embodiment, a fixing device (suction apparatus) is formed by providing a concave section 70 having an opening 71 in the surface contacting the subject W under examination and forming part of the wall of the concave section 70 of the resilient member 69. Therefore, by deforming the resilient member 69, the objective lens unit 63 can be fixed to the subject W under examination. Accordingly, accurate examination of changes in the subject W over time can be carried out. Also, the micro microscope 5 or microscope system 1 having such an objective lens unit 63 is capable of high-accuracy examination and examination over an extended period of time, similarly to the first embodiment described above.

The resilient member 69 is a ring-shaped member, but it may have a shape formed by cutting out part of a ring. For example, it is also possible to directly connect the outer frame 49 and the coupling ring 67, to provide an opening in part of the outer frame 49, and to fix the resilient part 69 so as to cover this opening.

Also, the concave section 70 may have any shape, as long as it forms a space having an opening 71 in the contact surface. For example, it is acceptable to form a hole or slot in the frame part 64, and to block the mouth of the opening 71 with the resilient member 69.

Furthermore, a member that presses the resilient member 69 may be attached to the frame part 64. One concrete example of such a member is a structure having one end connected to the resilient member 69 and the other end pulled upwards, with the central part between the ends being supported on the frame part 64 with a pin or the like.

Next, a first comparative example not forming part of the present invention will be described with reference to the drawings. Elements with the same structure as in the first and second embodiments are given the same reference numerals, and any description duplicating the first and second embodiments is omitted.

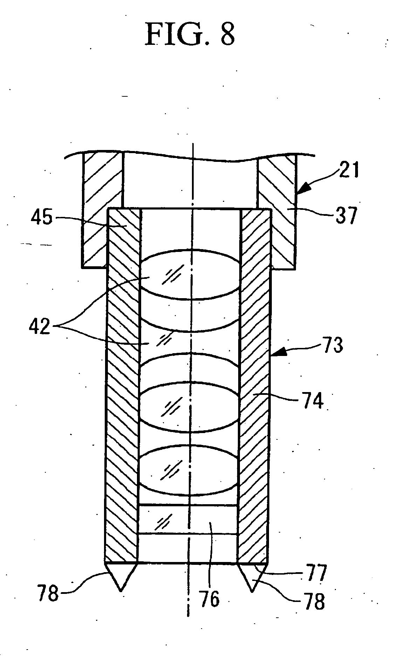

A microscope system according to this comparative example is characterized in the an objective lens unit 73 shown in Fig. 8 is attached to the micro microscope 5.

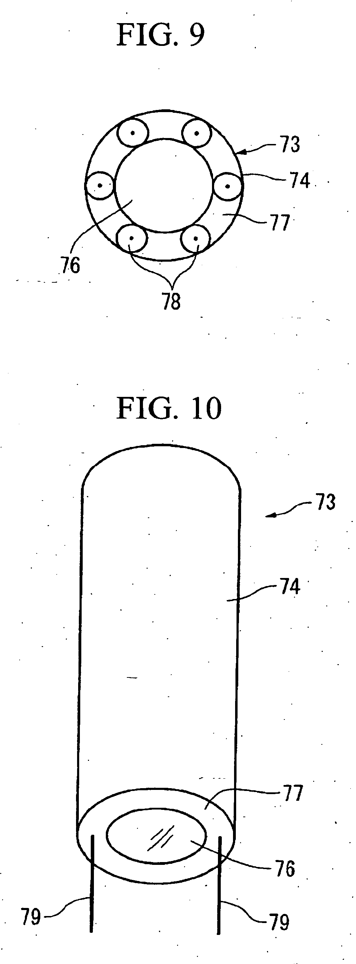

As shown in Fig. 8, the objective lens unit 73 has a frame part 74 containing objective lenses 42 formed of a plurality of lenses. At the upper part of the frame part 74, there is a mounting part 75 for connecting to the mounting part 37 of the head unit 21. Also, a glass plate 76 is attached at the bottom of the frame part 74. The lower surface of this glass plate 76 is positioned higher than a contact surface 77, but it may be positioned so as to be in substantially the same plane as the contact surface 77. As shown in Fig. 8 and Fig. 9, a plurality of equally spaced projections 78 are provided in the contact surface 77. Projections 78 are substantially cone-shaped, and the apexes thereof are disposed downwards, that is, towards the subject W under examination.

In Fig. 9, the projections 78 are provided at six positions. The number of projections 78 is not limited to this; however, from the viewpoint of preventing displacement between the objective lens unit 73 and the subject W under examination, the number of projections 78 is preferably two or more. When the projections are provided at two positions, as shown in Fig. 10, projections 79 may be disposed at two diametrically aligned positions of the cylindrical frame part 74. The shape of the projections 78 is not limited to a cone, and, for example, a long, thin rod-shape is also acceptable. A pointed needle is also acceptable. It is also possible to select the length of the projections from the short ones shown in Fig. 8 to the long ones shown in Fig. 10.

A description will now be given of the examination procedure using this microscope system 1. The procedure for positioning the objective lens unit 73 while carrying out examination using the binocular stereo microscope 4 is the same as in the first embodiment.

When positioning the objective lens unit 73, the head unit 21 is lowered until the contact surface 77 of the objective lens unit makes close contact with the subject W under examination. At this time, the projections 78 extending from the contact surface 77 directly pierce the tissue or an organ of the subject W under examination, and the objective lens unit 73 is fixed to the subject W under examination.

Then, when two-dimensional or three-dimensional examination of the subject W is completed and the head unit 21 is raised, the projections 78 are extracted from the subject W under examination, and the objective lens unit 73 is pulled away from the subject W under examination.

According to this comparative example, by pushing the projections 78 or 79 into the subject W under examination, it is possible to fix the objective lens unit 73 to the subject W under examination. Therefore, examination of changes in the subject W over time can be accurately carried out. Also, the micro microscope 5 and the microscope system 1 having such an objective lens unit 73 is capable of high-accuracy examination and examination over an extended period of time, as in the first embodiment described above.

The micro microscope 5 to which the objective lens units 23, 63, and 73 of the individual embodiments/comparative examples are attached has been described in terms of a confocal laser scanning microscope; however, it is also applicable to microscopes of the type in which the subject W under examination is illuminated with a light guide and images of the subject W under examination are obtained by a CCD. The same effects and results as described above can also be obtained with a micro microscopes of this kind.

The projections 78 or 79 shown in Fig. 8 or Fig. 9 may also be provided on the contact surface 46 of the inner frame 44 in the objective lens unit 23 shown in Fig. 3 and the objective lens unit 63 shown in Fig. 6. It is thus possible to more strongly fix the objective lens unit 23 or 63 to the subject W under examination.

As another example of a suction apparatus, a configuration in which the opening 51b of the inner space 51 shown in Fig. 3 can be blocked off with a tube and a pump for sucking out the air from the inner space 51 is attached to the end of the tube may be used. According to this suction apparatus, fixing or removal can be carried out with ease.

The outer frame is not limited to a circular shape; various shapes are possible, such as quadrangular shapes in cross-section, and so on. It is also permissible for the binocular stereo microscope 4 to be omitted from the microscope system 1.

Next, other comparative examples not forming part of the present invention will be described with reference to the drawings. Elements with the same structure as the first embodiment are given the same reference numerals, and any description duplicating the first embodiment is omitted.

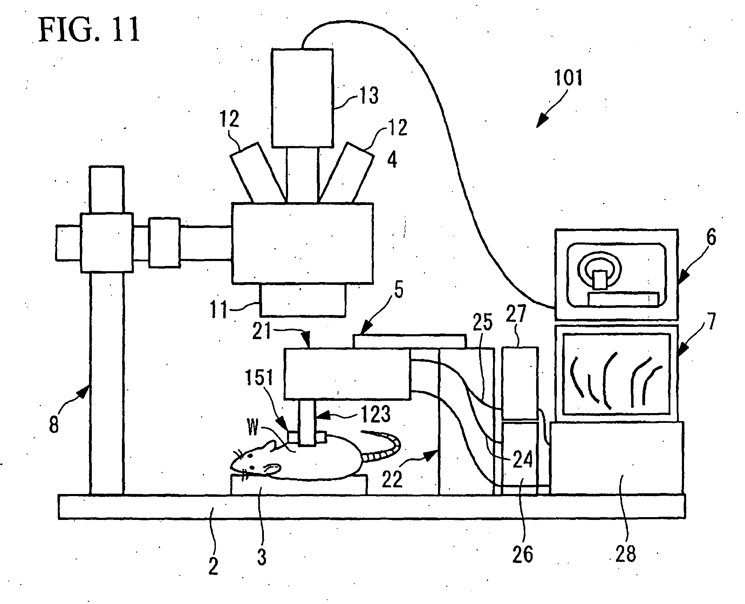

The structure of a microscope system according to a second comparative example is schematically shown in Fig. 11.

A microscope system 101 of the present comparative example has the same configuration of the microscope system of the first embodiment except that an objective lens unit 123 that differs from the objective lens unit 23 used in the first embodiment is attached to the lower surface of the head unit 21. An objective lens insertion tool 151, into which the end of the objective lens unit 123 is inserted and fixed, is attached to the subject W under examination.

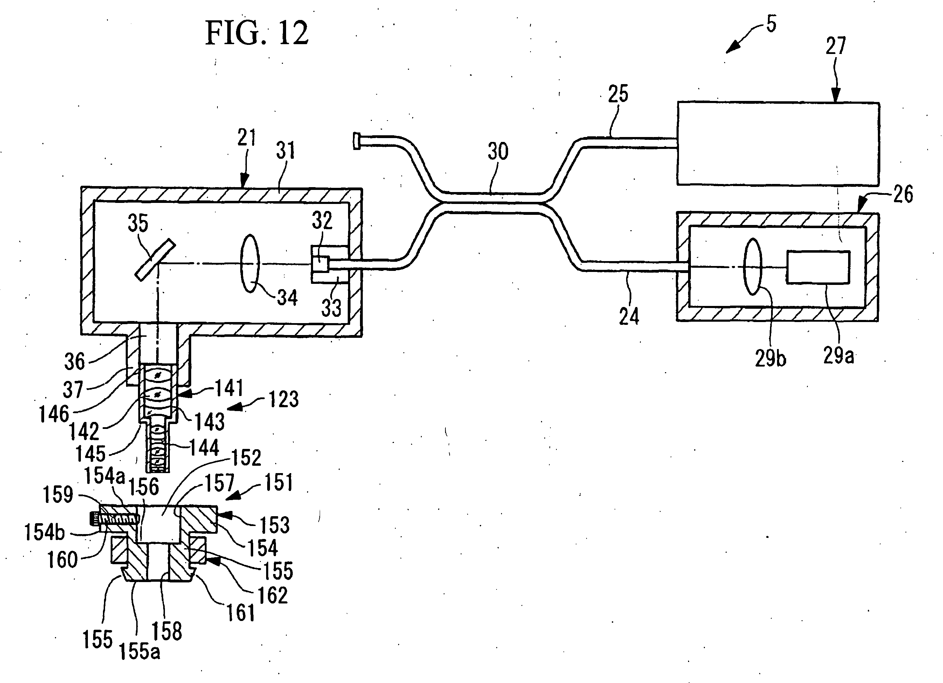

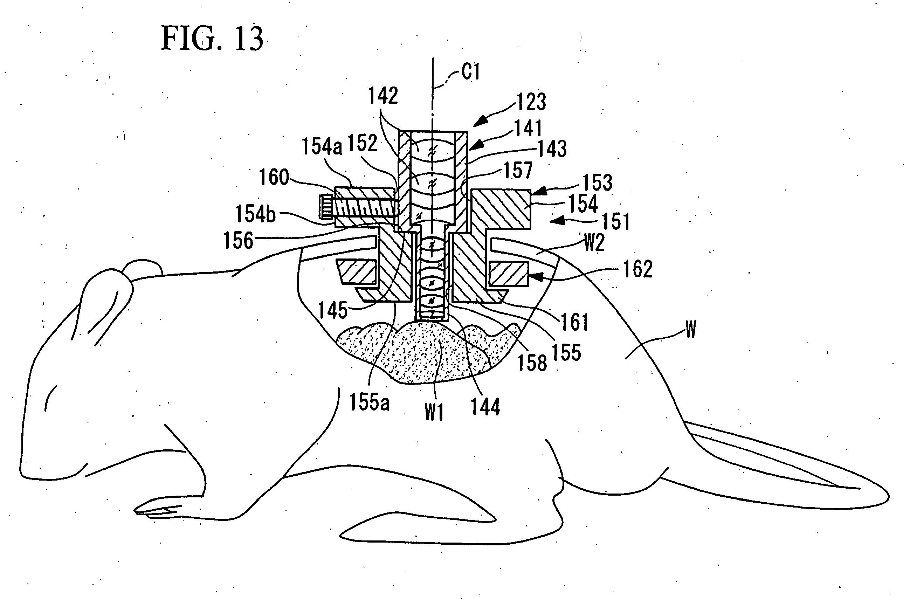

As shown in Fig. 12 and Fig. 13, the objective lens unit 123 has a structure in which a plurality of objective lenses 142 are held inside a frame part 141. The frame part 141 has a step so as to reduce the diameter thereof, and at the end of a large-diameter frame base part 143, which is attached to a mounting part of the head unit 21, a frame base part 144 that is smaller in diameter than the frame base part 143 and that is mainly inserted inside the subject W under examination is provided. This step is formed from the outer walls of the frame base part 143 and the frame base part 144 and from the plane intersecting approximately perpendicularly to the axis C1 (see Fig. 13) of the objective lens unit 123. This objective lens unit 123 is attached to the head unit 21 with a mounting part 146 at the end of the frame part 141, and is used while inserted in the objective lens insertion tool 151, which is fixed to the subject W under examination.

The objective lens insertion tool 151 has an insertion tool body 153 which positions and fixes the objective lens unit 123 in an insertion hole 152. The insertion tool body 153 has a structure in which an insertion part 155, which is inserted into the subject W under examination, projects from a circular base 154, and the insertion hole 152 penetrates from an upper surface 154a at the head unit 21 side to a tip surface 155a at the site desired to be examined (examination site W1 shown in Fig. 13). In this insertion hole 152, there is a step with a smaller diameter than the diameter of the opening thereof, and a large-diameter section 157 at the upper surface 154a side and a small-diameter section 158 at the tip surface 155a side are formed. Moreover, this step is formed from the inner walls of the large-diameter section 157 and the small-diameter section 158 and from the surface 156 connecting them; this surface 156 is provided so as to intersect the axis (axis C1 in Fig. 13) of the insertion hole 152 substantially perpendicularly.

As shown in Fig. 12, a threaded hole 159 that communicates with the insertion hole 152 is formed in a side surface 154b of the base 154, and a screw 160 is screwed therein.

The insertion part 155 has a smaller diameter than the base 154, and an engaging part 161 is provided at the tip of the insertion part 155. The engaging part 161 protrudes in a direction intersecting with the axis C1 of the insertion hole 152 substantially perpendicularly. Also, a taper increasing in diameter from the tip surface 155a towards the base 154 is provided on the outer surface of the engaging part 161. A fixing ring 162 is pushed onto the insertion part 155 from the tip surface 155a side.

As shown in Fig. 13, the fixing ring 162 is a fixing member for fixing the insertion tool body 153 to the skin W2, that is to say, to the subject W under examination, and has a ring shape. The fixing ring 162 may have a shape formed by cutting out part of a ring or it may be U-shaped.

When the objective lens unit 123 is inserted into the insertion hole 152 of the insertion tool body 153, while the surface 145 is in contact with the surface 156, the frame base part 143 of the objective lens unit 123 is contained in the large-diameter section 157 and the frame tip part 144 is contained in the small-diameter section 158. Then, the surface 156 of the insertion hole 152 and the surface 145 of the frame part 141 make contact, thus positioning the objective lens unit 123 in the height direction. The lengths of the frame base part 143 and the frame tip part 144 are larger than the corresponding lengths of the large-diameter section 157 and the small-diameter section 158. Therefore, the frame base part 143 protrudes upwards from the large-diameter section 158, and the frame tip part 144 protrudes towards the examination site W1 side from the small-diameter section 158.

A plurality of objective lens units 123 composed of different objective lenses 142 are used, depending on the image magnification ratio of the subject W under examination.

Next, a description is given below of one example of the procedure for examining a subject W using this microscope system 101.

First, as shown in Fig. 11, the subject W to be examined is placed on the stage 3 beneath the field of view of the binocular stereo microscope 4. At this time, the multi-axis stage 22 is operated by the controller 28 to retract the head unit 21 of the micro microscope 5 to a position where it does not obstruct examination with the binocular stereo microscope 4. If the head unit 21 is not attached to the multi-axis stage 22, in this step, the head unit 21 is mounted to the multi-axis stage 22.

Then, while checking the position of the examination site W1 shown in Fig. 13 with the binocular stereo microscope 4, the skin W2 of the subject W under examination is cut open. At this time, the examination site W1 may be dyed with a fluorescent dye, if necessary.

When the skin W2 of the subject W under examination is cut open, the fixing ring 162 is inserted into the subject W under examination, and then the insertion part 155 of the insertion tool body 153 is inserted inside the skin W2. Subsequently, after confirming that the insertion hole 152 is above the examination site W1, the fixing ring 162 is pushed onto the insertion part 155 from the tip surface 155a side. When the fixing ring 162 passes the engaging part 161, the skin W2 is clamped between the upper surface of the fixing ring 162 and the lower surface of the base 154 of the insertion tool body 153, and the objective lens insertion tool 151 is fixed to the skin W2.

When the preparations up to this step have been completed, the multi-axis stage 22 is operated again with the controller 28, and the head unit 21 of the micro microscope 5 is moved over the examination site. Positioning of the head unit 21, that is to say, the tip of the objective lens unit 123, is carried out while checking the binocular stereo microscope 4 or the monitor 6. Fig. 11 shows an example in which an image of the subject W under examination, whose skin W2 has been cut open, as well as the head unit 21 and the objective lens unit 123, is shown on the monitor 6.

Then, the head unit 21 is lowered until the surface 145 of the frame part 141 in the objective lens unit 123, which is fixed to the head unit 21, contacts the surface 156 of the insertion hole 152 in the objective lens insertion tool 151.

When the surface 145 and the surface 156 make contact, the screw 160 of the objective lens insertion tool 151 is tightened, and the tip of the screw 160 presses against the frame base part 143 of the objective lens unit 123, thus fixing the objective lens unit 123 in the objective lens insertion tool 151. Accordingly, the objective lens unit 123 (as well as the objective lens 14; and similarly hereinafter) is fixed to the skin W2, that is, to the subject W under examination, via the objective lens insertion tool 151.

When the objective lens unit 123 is positioned and fixed to the subject W under examination, by carrying out operations similar to those in the first embodiment, images of the subject W under examination can be output and/or recorded.

Also, similarly to the first embodiment, if the position of the focal point of the laser beam is shifted up and down with the collimator lens 34 and so on (see Fig. 12), internal images of the subject W under examination can be obtained, and three-dimensional examination of the examination site is thus possible.

In the case where examination of changes in the subject W over time is carried out, the screw 160 is loosened and the head unit 21 is pulled up to remove the objective lens unit 123 from the subject W under examination. On the other hand, the objective lens insertion tool 151 remains fixed to the subject W under examination. Then, when re-examining the same examination site W1 again, the objective lens unit 123 is inserted in and fixed to the still-fixed objective lens insertion tool 151, and examination is carried out.

In this comparative example, by using the objective lens insertion tool 151, which is fixed in advance to the subject W under examination, the objective lens unit 123 can be fixed to the subject W under examination. Furthermore, according to this objective lens insertion tool 151, since positioning of the objective lens unit 123 can be carried out in the depth direction and in the left and right directions with the step part (surface 156) and the screw 160, positioning of the objective lens unit 123 with respect to the subject W under examination is possible. Furthermore, when the screw 160 is loosened, the objective lens unit 123 can be easily removed from the objective lens insertion tool 151, and therefore, the objective lens unit 123 can be removed from the subject W under examination when examination is not being carried out.

In addition, since the micro microscope 5, to which this type of objective lens unit 123 is attached, can be fixed to a predetermined position of the objective lenses 142, accurate two-dimensional examination or three-dimensional examination of the subject can be carried out, and it is also possible to carry out examination over an extended period of time.

Since the microscope system 101 including this kind of micro microscope 5 can fix the objective lens unit 123 to the subject W under examination while checking the examination position with the binocular stereo microscope 4, accurate two-dimensional examination or three-dimensional examination of the subject W can be carried out, and it is also possible to carry out examination over an extended period of time.

In this comparative example, the base 154 and the insertion part 155 of the objective lens insertion tool 151 have a circular shape disposed concentrically with the frame part 141 of the objective lens unit 123; however, these may have quadrangular shapes or other shapes. Also, two or more sets of threaded holes 159 and screws 160 may be provided.

Next, a third comparative example not forming part of the present invention will be described with reference to the drawings. Elements having the same structure as those of the preceding embodiments and comparative examples are given the same reference numerals, and any description duplicating the preceding embodiments or comparative examples is omitted.

The microscope system of this comparative example is characterized in that the frame part of the objective lens is L-shaped.

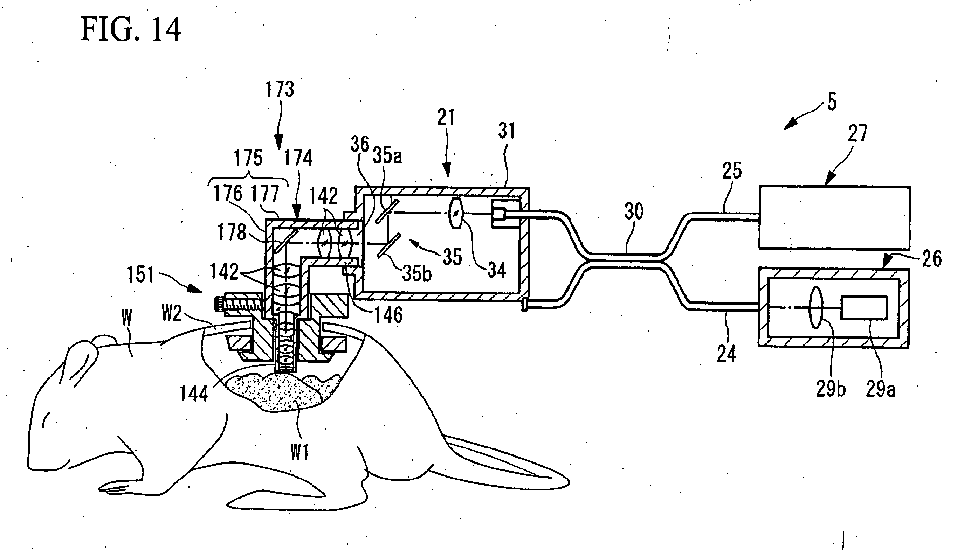

As shown in Fig. 14, an objective lens unit 173 has a frame part 174 holding a plurality of objective lenses 142. A frame part 174 is formed of an L-shaped frame base part 175 and a frame tip part 144 extending from the frame base part 175. The frame base part 175 is formed of a vertical part 176 continuous with the frame tip part 144 and extending upwards, and a horizontal part 177 extending horizontally from near the upper end of the vertical part 176. A mounting part 146, which is used when attaching to the head unit 21, is provided at the end of the horizontal part 177. In this type of objective lens unit 173, the objective lenses 142 are distributed in the frame tip part 144, the vertical part 176, and the horizontal part 177. In addition, a folding mirror 178 for folding the optical axis by 90 DEG is contained at the position where the axis of the vertical part 176 and the axis of the horizontal part 177 intersect.

The head unit 21 to which this objective lens unit 173 is attached is provided with a window 36 and a mounting part 37 in the side face of the case 31, and is provided with a condenser lens 34 for focusing the laser beam introduced through the optical fiber 24 and two galvano mirrors 35a and 35b. The two galvano mirrors 35a and 35b constitute an optical scanner 35, and are disposed so as to emit the two-dimensionally scanned laser beam from the window 36 towards the objective lens unit 173.

When carrying out examination using this objective lens unit 173, after fixing the objective lens insertion tool 151 to the skin W2 of the subject W under examination, the objective lens unit 173 is inserted in and fixed to the objective lens insertion tool 151 while checking the binocular stereo microscope 4.

Then, during examination, the laser beam passing through the objective lenses 142 in the horizontal part 177 is deflected downward by the folding mirror 178, passes through the objective lenses 142 in the vertical part 176 and the frame tip part 144, and is focused to a predetermined position on the subject W under examination.

According to this comparative example, since the frame part 174 of the objective lens unit 173 is bent substantially at a right angle between the tip and the mounting part 146 attached to the head unit 21, the head unit 21 can be disposed towards the subject W under examination. Therefore, since the head unit 21 does not intrude into the field of view of the binocular stereo microscope 4, it is easier to check the insertion position of the objective lens unit 173. Also, as described above, by using the objective lens insertion tool 151, the objective lens unit 173 and the objective lenses 142 can be positioned and fixed with respect to the subject W under examination.

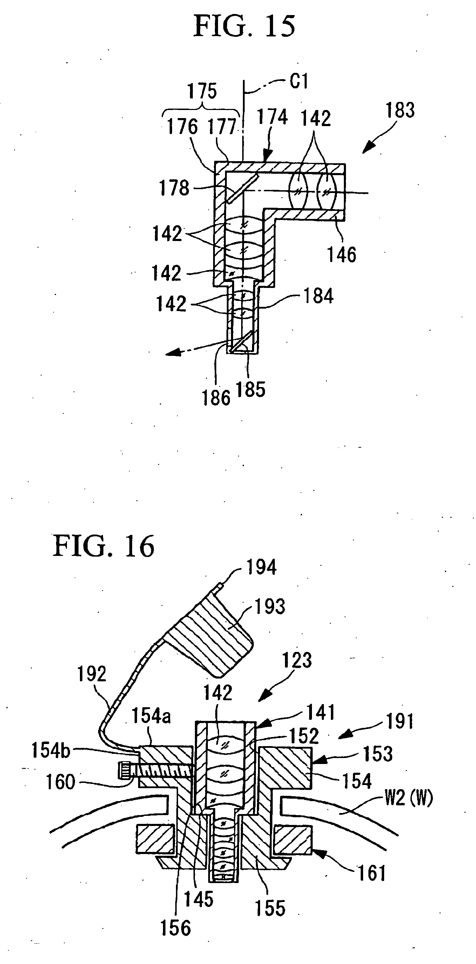

The L-shaped objective lens unit in the frame part 174 may have other shapes; for example, an objective lens unit 183 shown in Fig. 15 is conceivable.

The frame part 174 of this objective lens unit 183 is formed of the above-described frame base part 175 and a frame tip part 184. The frame tip part 184 is the section that is mainly inserted into the subject W under examination. A folding mirror 185 is provided at the tip near the objective lenses 142 at the side of the frame tip part 184 closest to the subject W under examination (the lower side), which deflects the laser beam by 90 DEG . Also, a window 186 that transmits the laser beam deflected by the folding mirror 185 is provided in the side face of the frame tip part 184.

Since the light can be focused onto a region in a direction perpendicular to the axis C1 of the frame tip part 184 and the vertical part 176 with this objective lens unit 183, examination of such a region is possible. When the folding mirror 185 is held at an inclined angle of 45 degrees with respect to the axis C1, examination of a region in the horizontal direction becomes possible. Also, when the angle formed by the folding mirror 185 and the axis C1 is from 0 degrees to 45 degrees, examination of a region positioned below the horizontal direction becomes possible. Likewise, when the angle formed by the folding mirror 185 and the axis C1 is from 45 degrees to 90 degrees, examination of a region positioned above the horizontal axis becomes possible.

Next, a fourth comparative example not forming part of the present invention will be described with reference to the drawings. Elements having the same structure as those in the preceding embodiments and comparative examples are given the same reference numerals, and any description duplicating that of the preceding embodiments or comparative examples is omitted.

The microscope system of this comparative example is characterized in that a cover for closing the through-hole in the objective lens insertion tool is provided.

As shown in Fig. 16, an objective lens insertion tool 191 has a configuration in which it is fixed to the skin W2 by a base 154 of an insertion tool body 153 and a fixing ring 162, the objective lens unit 123 is inserted into the insertion hole 152, and the objective lens unit 123 is positioned and fixed by a step (surface 156) and a screw 160.

In addition, a sheet-like member (resilient member) 192, which is long, thin, and deformable, extends from a side face 154b in the vicinity of a top face 154a of the base 154. A cover 193 for closing the mouth of the insertion hole 152 is attached to the end of this sheet-like member 192. This cover 193 is tapered in such a manner that the cross-sectional area thereof decreases from the base, where the sheet-like member 192 is attached, towards the tip thereof. Also, at the side opposite to the sheet-like member 192, a flange 194 extends from the base of the cover 193, so that the cover 193 can be easily grasped with the fingers or forceps.

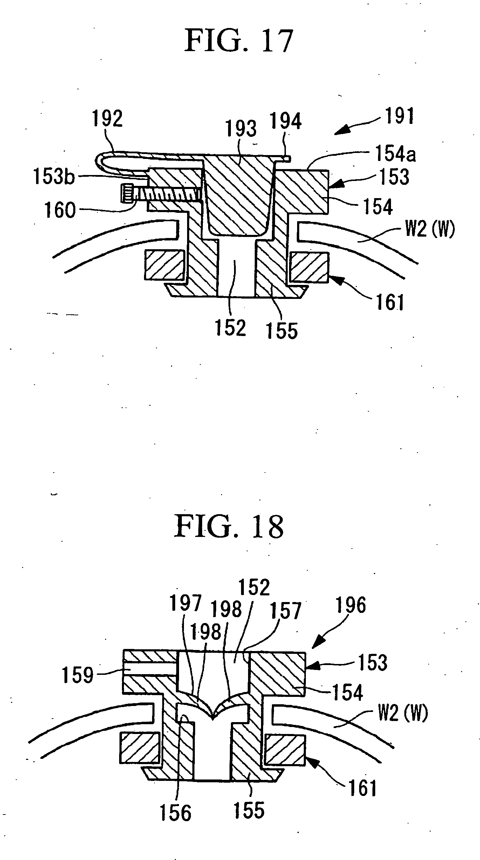

In this microscope system 1, the objective lens insertion tool 191 is attached to the skin W2 while carrying out examination with the binocular stereo microscope 4, as described above. When carrying out examination, the objective lens unit 123 is inserted into the insertion hole 152 of the objective lens insertion tool 191, and two-dimensional examination or three-dimensional examination is carried out with the micro microscope 5. Then, when examination is not being carried out, the objective lens unit 123 is removed from the insertion hole 152, and, as shown in Fig. 17, the cover 193 is pushed into the insertion hole 152 from the top surface 154a side, thus sealing the insertion hole 152. Moreover, when carrying out re-examination, the cover 193 is pulled out of the insertion hole 152 by gripping the flange 194 or the like, and the objective lens unit 123 is inserted again into the insertion hole 152.

According to this type of objective lens insertion tool 191, by clamping the skin W2 with the insertion tool body 153 and the fixing ring 162, it is possible to position and fix the objective lens unit 123 with respect to the subject W under examination. Also, when the objective lens unit 123 is not inserted, since the insertion hole 152 is sealed with the cover 193, foreign objects are prevented from entering the subject W under examination. Moreover, the micro microscope 5 and microscope system 101 having such an objective lens insertion tool 191 are capable of accurate examination and examination over an extended period of time, as in the second comparative example described above.

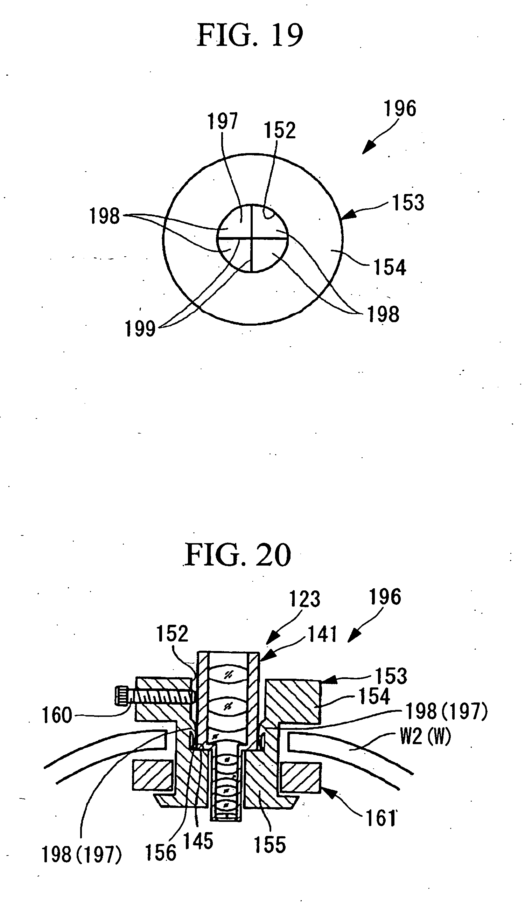

Fig. 18 and Fig. 19 show an objective lens insertion tool 196 in which the cover for preventing entry of foreign objects has a different configuration.

In this objective lens insertion tool 196, a cover 197 is provided inside the insertion hole 152 of the insertion tool body 153. This cover 197 is formed of a plurality of resilient pieces, which are provided inside the insertion hole 152. These resilient pieces 198 are formed from a cross-shaped cutout 199 cut into a resilient member sealing off the mouth of a large-diameter section 157 of the insertion hole 152, and their base, that is, the side at the internal wall of the insertion hole, is provided integrally with the internal wall. The cutout 199 may be slit shaped or have a radiating shape.

When the objective lens unit 123 is not inserted, since the peripheral edges at the cutout 199 sides of the resilient pieces are connected to each other, thus sealing off the insertion hole 152, foreign objects are prevented from entering the subject W under examination through the insertion hole 152.

As shown in Fig. 20, when the objective lens unit 123 is inserted into the insertion hole 152, the resilient pieces 198 are pushed by the frame part 141 of the objective lens unit 123 so as to become bent downwards, the peripheral edges of the resilient pieces 198 separate, and an opening through which the objective lens unit 123 can be inserted is formed. Then, once the objective lens unit 123 is inserted, since the deformed resilient pieces 192 are in contact with the frame part 141 of the objective lens unit 123, the objective lens unit 123 can be more reliably positioned and fixed.

Next, a fifth comparative example not forming part of the present invention will be described with reference to the drawings. Elements having the same structure as those in the preceding embodiments and comparative examples are given the same reference numerals, and any description duplicating that of the preceding embodiments or comparative examples is omitted.

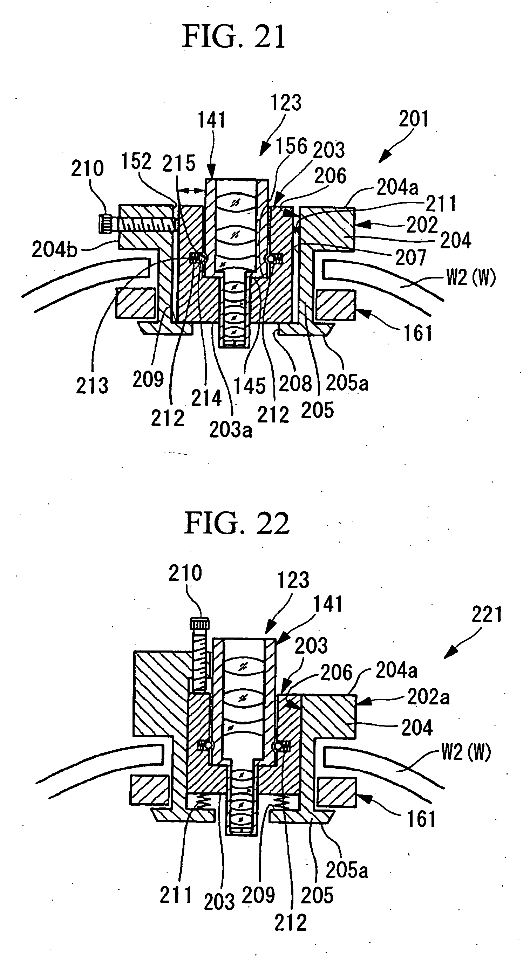

The microscope system of this comparative example is characterized in that a mechanism for finely moving the objective lens unit 123 is provided, as shown in Fig. 21 and Fig. 22.

As shown in Fig. 21, an objective lens insertion tool 201 has a configuration in which the skin W2 of the subject W under examination is clamped with a fixing ring 162 and a fixed part 202, and the objective lens unit 123 is inserted into a finely movable part 203, which can be finely moved with respect to the fixed part 202.

The fixed part 202 has a base part 204 and an insertion part 205, having the same function as those in the preceding comparative examples, and a through-hole 206 for inserting the finely movable part 203 through the center thereof is formed. The through-hole 206 has openings in each of an upper surface 204a and a tip surface 205a, and a large-diameter section 207 at the upper face 204a side and a small-diameter section 208 at the tip face 205a side are formed by a step. The step is formed by the inner wall of the large-diameter section 207 and the inner wall of the small-diameter section 208 and by a flat surface 209 intersecting the axis of the through-hole 206 substantially perpendicularly. A bottom surface 203a of the finely movable part 203 is in contact with this surface 209.

The tip of a finely movable knob 210, which is screwed into the base 204 from the side surface 204b, is in contact with the side wall of the finely movable part 203. One end of a pushing member (coil spring) 211 is fixed at a position of the internal wall of the through-hole 206 opposing the tip of the finely movable knob 210, and the other end of the pushing member 211 is fixed to the side wall of the finely movable part 203.

An insertion hole 152 into which the objective lens unit 123 is inserted is formed inside the finely movable part 203, and a flat surface 145 of the objective lens unit 123 is in contact with a flat surface 156 in the insertion hole 152. Also, a plurality of concave sections 212 are disposed in this insertion hole 152, and a ball 214 that is urged towards the axis of the insertion hole 152 by a resilient member 213 such as a coil spring is contained in each concave section 212.

Concave-shaped engaging slots 215 are formed in the frame part 141 of the objective lens unit 123 corresponding to the positions of the balls 214.

When using this objective lens insertion tool 201, initially, the skin W2 is clamped by the fixing ring 162 and the base 204 so as to fix it to the subject W under examination. When the objective lens unit 123 is inserted into the insertion hole 152 of the finely movable part 203 in this state, the balls 214 are engaged with the engaging slots 215 in the frame part 141 of the objective lens unit 123, thus fixing the objective lens unit 123 at a predetermined position on the finely movable part 203.

When finely adjusting the position of the objective lens unit 123 in the lateral direction or the longitudinal direction, the finely movable knob 210 is rotated. When the finely movable knob 21 is pushed in, the finely movable part 203 moves in the direction that presses against the pressing member 211, and the objective lens unit 123, which is fixed to the finely movable part 203, also moves in the same direction. On the other hand, when the finely movable knob 210 is reversed, the pressing member 211 is restored to its original state, the finely movable part 203 moves in the direction in which the pressing member expands, and the objective lens unit 123, which is fixed to the finely movable part 203, also moves in the same direction.

After finely adjusting the position of the objective lens unit 123 in this way, two-dimensional or three-dimensional examination is carried out using the micro microscope 5, as described above.

According to this objective lens insertion tool 201, the objective lens unit 123 can be fixed to the subject W under examination via the finely movable part 203 and the fixed part 202. Also, by moving the finely movable part 203 in parallel with respect to the fixed part 202 using the finely movable mechanism formed of the finely movable knob 210 and the pressing member 211, the position of the objective lens unit 123 can be finely adjusted. Only one set consisting of the finely movable knob 210 and the pressing member 211 is shown in Fig. 21; however, if two sets of finely movable knobs 210 and pressing members 211 are provided at positions intersecting at right angles, it is possible to finely adjust the objective lens unit 123 longitudinally and laterally (in the X and Y directions).

The micro microscope 5 and microscope system 1 including this type of objective lens insertion tool 201 are capable of carrying out accurate examination and examination over an extended period of time, as in the second comparative example described above.

Furthermore, it is also possible to finely move the objective lens unit 123 upwards and downwards with an objective lens insertion tool 221 shown in Fig. 22.

This objective lens insertion tool 221 has a structure in which the finely movable part 203 is inserted into the through-hole 206 of the fixed unit 202. One end of a pressing member 211 is fixed to a flat surface 209 in the through-hole 206, and the other end of the pressing member is fixed to a bottom surface 203 of the finely movable part 203. Also, part of the base 203 of the fixed part 202 extends towards the axis of the through-hole 206, and a support part 222 for rotatably supporting the finely movable knob 210 is formed. Since the finely movable knob 210 pushes the finely movable part 203 in the vertical direction, the tip thereof is in contact with the upper surface of the finely movable part 203.

In this objective lens insertion tool 221, when the finely movable knob 210 is pushed in while turning it, the pushing member 211 is compressed and the finely movable part 203 is lowered. On the other hand, when the finely movable knob 210 is reversed by turning it, the pushing member 211 pushes up against the finely movable part 203, thus raising the finely movable part 203. Then, after finely adjusting the position of the objective lens unit 123, two-dimensional or three-dimensional examination is carried out with the micro microscope 5, as described above.

When this type of objective lens insertion tool 221 is used, since it is possible to finely adjust the objective lens unit 123 upwards and downwards, for example, when focusing the laser beam onto the surface of an examination site or when carrying out three-dimensional examination, the operation thereof is easy. It is possible to focus the objective lens unit 123 using only the finely movable mechanism formed of the finely movable knob 210 and the pressing member 211, or to perform focusing together with the optical system of the head unit 21. When using only the finely movable mechanism of the objective lens insertion tool 221, the structure of the head unit 21 can be simplified.

Moreover, if the mechanism which can be finely moved in the horizontal direction as shown in Fig. 21 and the mechanism which can be finely moved in the vertical direction as shown in Fig. 22 are combined, it is possible to finely adjust the objective lens unit 123 in the lateral and longitudinal directions as well as in the up and down directions.

It is also possible to inject a liquid such as water or the like between the objective lens unit 123 and the subject W under examination, and to perform focus adjustment of the light according to the amount of liquid. For example, in the case of the objective lens insertion tool 151 shown in Fig. 14, the insertion part 154 is lengthened so as to protrude further towards the examination site W1 side than the tip of the objective lens unit 123. Also, a gap through which the liquid can flow is formed between the insertion hole 152 and the objective lens unit 123. Then, a tube connected to a pump (a syringe may also be used) for supplying the liquid is inserted into this gap.

During examination, the insertion part 154 is brought into close contact with the vicinity of the examination site W1, and then the objective lens insertion tool is fixed to the skin W2. Since the examination site W1 is sealed by the space formed between the insertion hole 152 and the objective lens unit 123, if liquid is injected into this space, the focus position at the objective lens unit 123 side changes due to the difference in the degree of sealing between air and liquid. As a result, the focus position is changed by adding or reducing the amount of liquid while checking the image displayed on the monitor 7.

According to the objective lens insertion tool of this type, the objective lens can be positioned and fixed with respect to the examination site, and in addition, the focal position can be adjusted. To prevent leakage of the liquid from the end of the insertion part, a watertight gasket or the like may be attached to the end of the insertion part.

Next, a sixth comparative example not forming part of the present invention will be described with reference to the drawings. Elements having the same structure as those of the preceding embodiments and comparative examples are given the same reference numerals, and any description duplicating that of the preceding embodiments or comparative examples is omitted.

The microscope system of this comparative example is characterized in that there are two or more holes into which the objective lenses can be inserted.

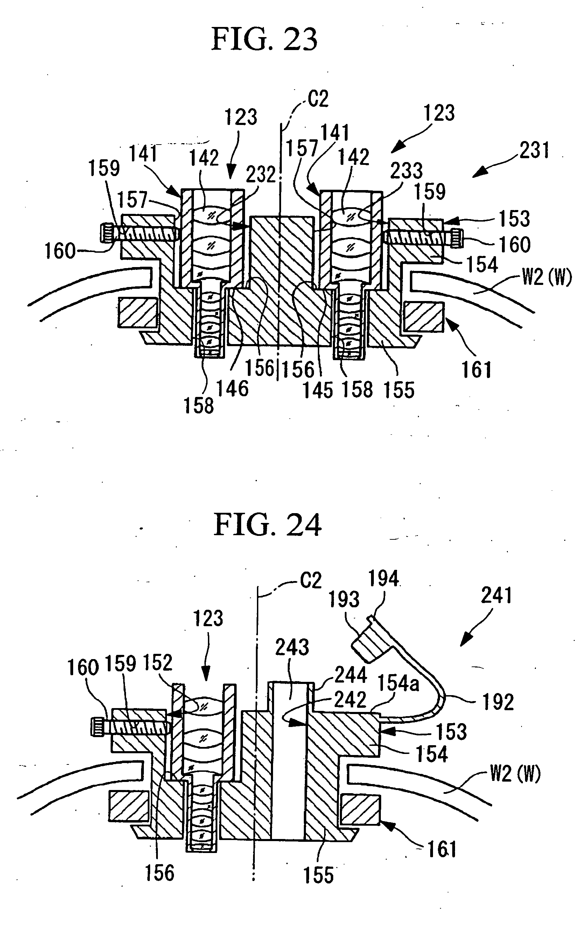

As shown in Fig. 23, an objective lens insertion tool 231 is formed of a fixing ring 162 and an insertion tool body 153, and a first insertion hole 232 and a second insertion hole 233 are formed in parallel in the insertion tool body 153.

The first insertion hole 232 and the second insertion hole 233 are provided along the height direction of the insertion tool body 153, at a position towards the outer side from the central axis C2, extend through a base 154 and an insertion part 155 of the insertion tool body 153, and have axes that are parallel to each other. Also, the first insertion hole 232 and the second insertion hole 233 each have a large-diameter section 157 and a small-diameter section 158.

A threaded hole 159 is bored through the base 154 from the side thereof to the first insertion hole 232, and a screw 160 for fixing the objective lens unit 123 inside the first insertion hole 232 is screwed therein. In the same way, a threaded hole 159 is bored through the base 154 from the side thereof to the second insertion hole 233, and a screw 160 for fixing the objective lens unit 123 inside the second insertion hole 233 is screwed therein.

The number of insertion holes is not limited to two; three or more holes are also acceptable. In this case, the number of threaded holes 159 and screws 160 provided corresponds to the number of insertion holes. In addition, a plurality of threaded holes 159 and screws 160 may be provided for one insertion hole 232 or 233.

When carrying out examination of the subject W, initially, the objective lens insertion tool 231 is positioned and fixed with respect to the subject W under examination. At this time, positioning of the two insertion holes 232 and 233 in the up and down directions at the site to be examined is checked using the binocular stereo microscope 4. Then, the objective lens units 123 are inserted into the corresponding insertion holes 232 and 233, and are fixed with their respective screws 160. When examination is completed or when the objective lens units 123 are to be replaced, the screws 160 are loosened and the objective lens units 123 inserted in the insertion holes 232 and 233 are removed from the objective lens insertion tool 231. The objective lens units 123 inserted in the respective insertion holes 232 and 233 may have different magnifications or the same magnifications.

According to this objective lens insertion tool 231, when the sites to be examined are close to each other, the objective lens units 123 can be positioned and fixed using a single objective lens insertion tool 231. Therefore, accurate examination is possible even in the case where the subject W under examination is a small animal or the like, to which attachment of a plurality of objective lens insertion tools would be difficult.

When the cover 193 shown in Fig. 16 is provided in each of the insertion holes 232 and 232, even when the objective lens units 123 are removed from the insertion holes 232 and 233, foreign objects can be prevented from entering the subject W under examination from the insertion holes 232 and 233. The cover 193 may be provided for only one of the insertion holes 232 and 233.

Next, a seventh comparative example not forming part of the present invention will be described with reference to the drawings. Elements having the same structure as those in the preceding embodiments and comparative examples are given the same reference numerals, and any description duplicating that of the preceding embodiments or comparative examples is omitted.

The microscope system of this comparative example is characterized in that, instead of an insertion hole for inserting an objective lens or the like, a hole used for a purpose other than insertion of an objective lens is provided.

As shown in Fig. 24, an insertion hole 152 of an objective lens insertion tool 241 has a large-diameter section 157 and a small-diameter section 158, and is formed such that an objective lens unit 123 is fixed by means of a flat surface 156 and a screw 160. A treatment hole 242 extends through a base 154 and a tip part 155 along an axis parallel to a central axis C2, and its internal diameter is substantially uniform. At the peripheral edge of an opening 243 at the top of the treatment hole 242, the base 154 projects upwards along the central axis C2, forming a ring-shaped protrusion 244. This ring-shaped protrusion 244 is used for fixing or guiding a treatment instrument. Also, at the side wall close to the upper surface 154a of the base 154, a curved sheet-like member is integrally provided, and a cover 193 fitted into the ring-shaped protrusion for sealing the opening 243 is integrally attached to the end of this sheet-like member 192. The outer surface of the ring-shaped protrusion 244 may be provided with indented grooves and projecting grooves around the circumference thereof, to improve the fixing of the treatment instrument.

With this microscope system 101, the objective lens insertion tool 241 is positioned and fixed to the subject W under examination. Then, the objective lens unit 123 is inserted into the insertion hole 152 and fixed, and the cover 193 fitted into the ring-shaped projection 244 is removed. If the examination site W1 is concealed by another organ or the like, a basket is inserted from the treatment hole 242, and the basket is opened inside the subject W under examination to press against the interior of the subject W under examination, thus exposing the examination site W1 to allow examination with the objective lens unit 123.

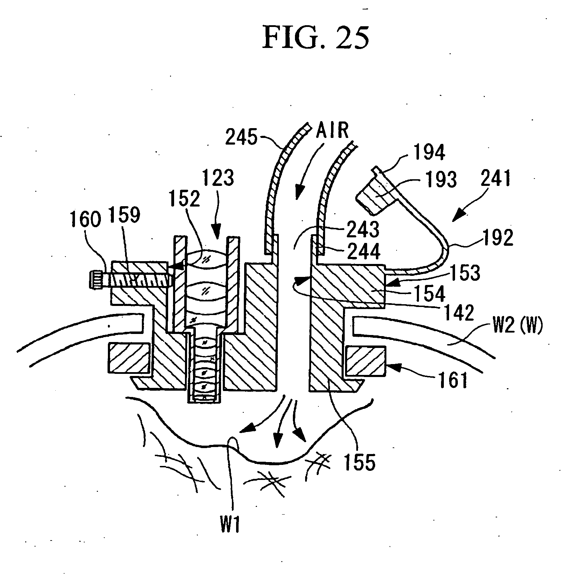

As shown in Fig. 25, when a sheath 245 is connected to the ring-shaped protrusion 244 and air is supplied to the interior of the subject W under examination, it is possible to widen the area surrounding the examination site W1. Also, if a drug is supplied from the sheath 245, inflammation of the examination site W1 or its vicinity can be prevented.

By using this type of treatment hole 242, examination of the examination site W1 can be reliably carried out. Furthermore, it is possible to administer the required treatment to the examination site W1 or its vicinity. The treatment instrument attached to or inserted in the treatment hole 242 is not limited to those described above; a catheter, forceps or the like can also be used.

Next, an eighth comparative example not forming part of the present invention will be described with reference to the drawings. Elements having the same structure as those in the preceding embodiments and comparative examples are given the same reference numerals, and any description duplicating that of the preceding embodiments or comparative examples is omitted.

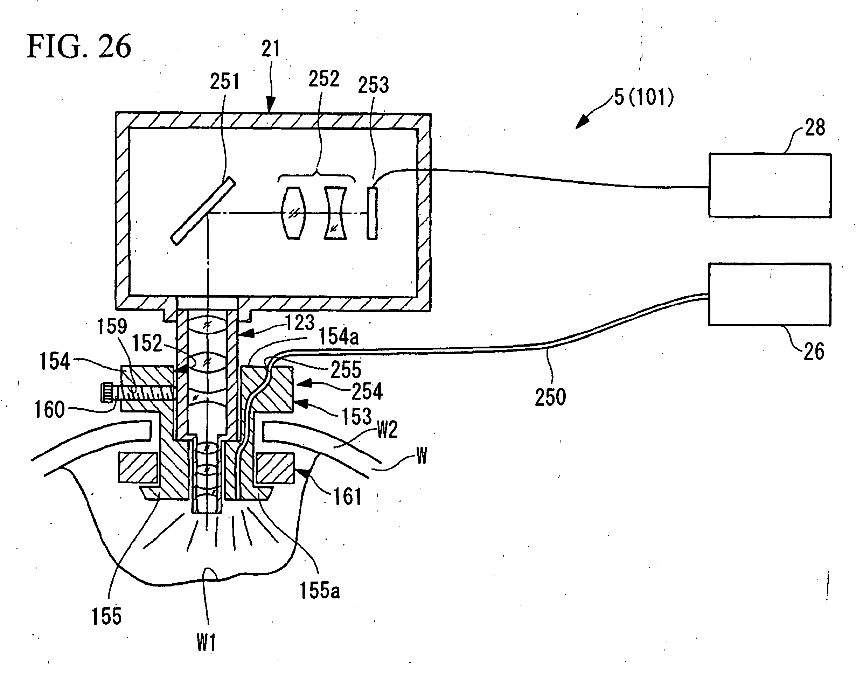

As shown in Fig. 26, a micro microscope 5 of a microscope system 101 has a light source 26 for illuminating an examination site W1, and a folding mirror 251, an image-forming optical system 252, and a CCD 253 are disposed in a head unit 221 to which an objective lens unit 123 is attached. The CCD 253 is connected to a controller 28, and images of the examination site W1 captured by the CCD 253 are output on a monitor 7 (see Fig. 11). A light guide 250 formed of an optical fiber bundle is connected to the light source 26.

An objective lens insertion tool 254 is formed of an insertion tool body 153 and a fixing ring 162. An insertion hole 152 is formed in the center of the insertion tool body 153 along an axis in the vertical direction, and the objective lens unit 123 is inserted therein. Also, in the insertion tool body 153, a light guide hole 255 for inserting the end of the light guide 250 relative to the central axis of the insertion tool body 153 (that is, the optical axis of the objective lens unit 123) is provided in a part on the opposite side from the part where a threaded hole 159 is formed. The openings of the light guide hole 255 are provided at an upper face 154a of the base 154 and at a position close to the opening of the insertion hole 152 in an end face 155a of the insertion part 155. The light guide hole 255 may be inclined so that the examination site W1 side (the lower side) goes towards the central axis of the insertion tool body 153.

When this type of objective lens insertion tool 254 is used, the objective lens unit 123 can be positioned and fixed with respect to the subject W under examination. Also, since the end of the light guide is disposed close to the examination site W1, the examination site W1 can be brightly illuminated and detailed examination images can be obtained.

Instead of providing the opening of the light guide hole 255 at the upper surface 154a of the base 154, the opening of the light guide hole 255 may be provided in the side face of the base 154. Also, the light guide hole 255 may be gently curved or in the form of a straight line.

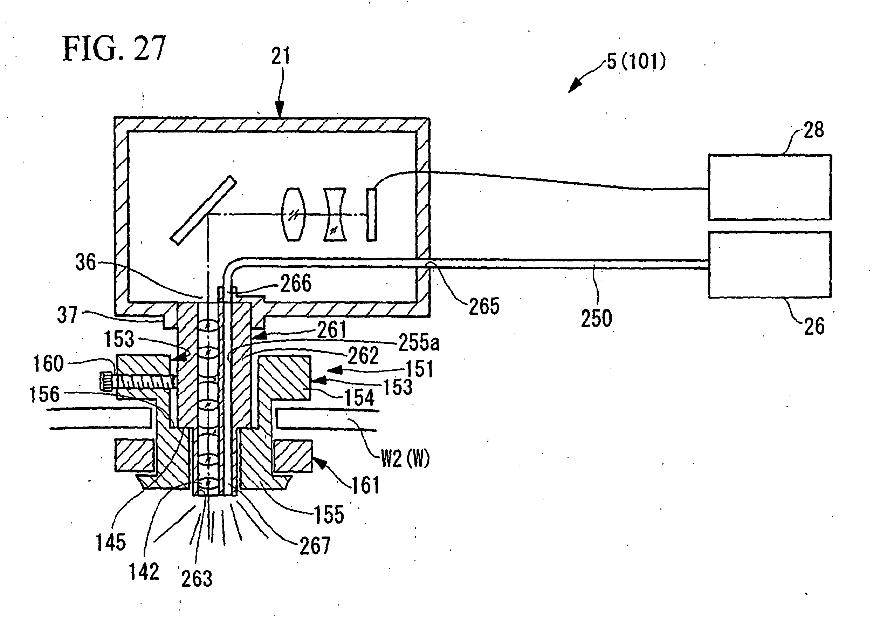

Furthermore, as shown in Fig. 27, the light guide hole 255 may be provided in a frame part 262 of an objective lens unit 261. The frame part 262 has a hole 263 for holding a plurality of objective lenses 142 and a light guide hole 255a through which a light guide 267 passes, and these holes 255a and 263 are provided in parallel along the axis extending in the height direction of the frame part 262,

On the other hand, a hole 265 with the same diameter as the outer diameter of the light guide 250 is provided in the side face of the head unit 21 of the micro microscope 5. Also, a hole 266 with the same diameter as the outer diameter of the light guide 250 is provided at a position close to a window 36 inside a mounting part 37 of the head unit 21. The light guide 250, which is connected to the light source 26 of the micro microscope 5, is lead into the head unit 21 from the hole 265 and is inserted into the hole 266. The hole 266 is sealed so that light from the light guide 250 does not leak inside the head unit 21.

With this microscope system 101, when the objective lens unit 261 is attached to the head unit 21, the hole 266 and the light guide hole 255a are secured together so as to be continuous. Then, the objective lens unit 261 is inserted in the insertion hole 152 of the objective lens insertion tool 151, which is positioned and fixed with respect to the subject W under examination, and is fixed with the flat surface 156 and the screw 160. During examination, light from the light guide 26 passes through the light guide 250 and is guided to the light guide hole 255a from the hole 266. Then, it is radiated towards the examination site W1 from the opening at the end of the light guide 267 in the light guide hole 255a.

The light guide 250 may be inserted into the light guide hole 255a to directly illuminate the examination site W1 with the light guide 250. In this case, the light guide 250 is removed from the hole 266 in advance and is inserted into the light guide hole 255a, and then the objective lens unit 261 is fixed to the head unit 21.

According to this comparative example, since light from the vicinity of the objective lenses 142 in the objective lens unit 261 is radiated, shadows do not easily occur, and the examination site W1 can thus be illuminated more reliably.

The micro microscope 5 according to the comparative examples has been described in terms of a confocal laser scanning microscope; however, it may also be a microscope of the type that illuminates the examination site with a light guide and obtains images of the subject W under examination using a CCD, which achieves the same effects and results as described above.

Also, the comparative examples may be combined. For example, a cover 193 (see Fig. 16) or a cover 197 (see Fig. 18) may be provided in the objective lens insertion tools 201 and 221 having a finely movable part 203, as shown in Fig. 21 and Fig. 22, or in the objective lens insertion tool 254 having a light-guide hole 255, as shown in Fig. 26.

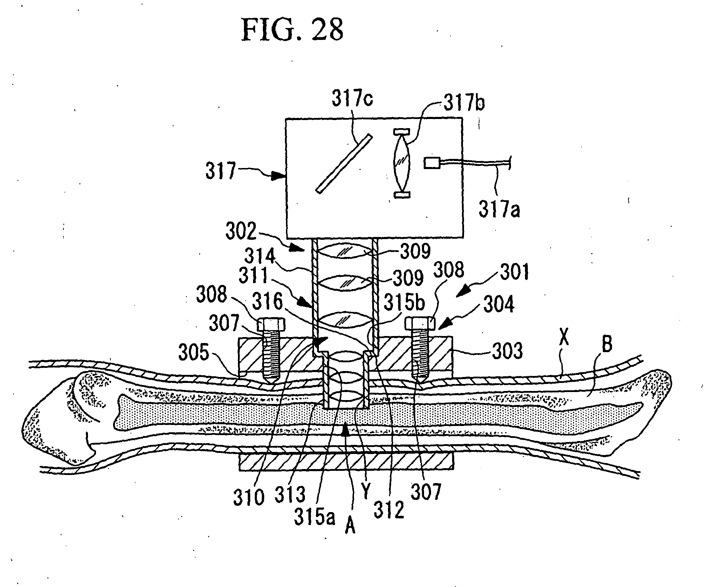

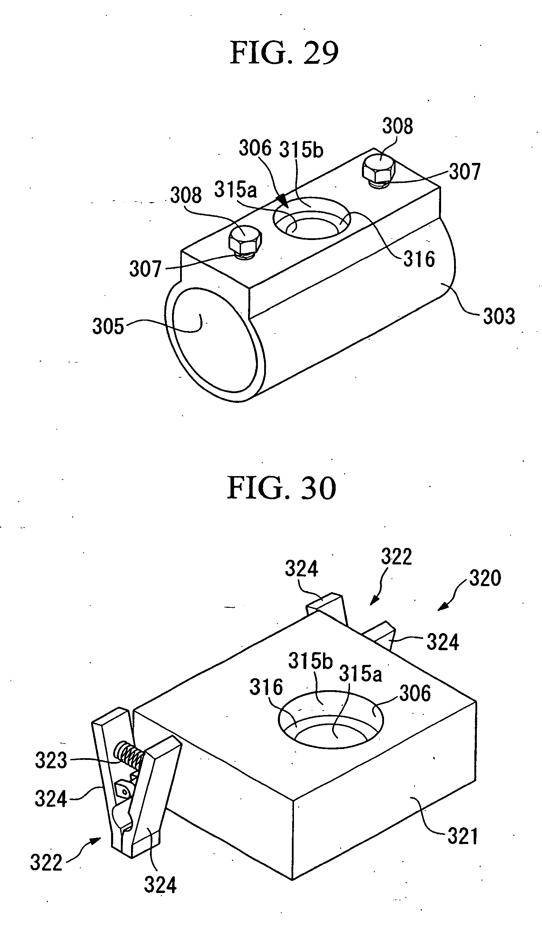

Next, a fixing apparatus of an objective optical system according to a ninth comparative example not forming part of the present invention will be described below with reference to Fig. 28 and Fig. 29.

A fixing apparatus 301 of the objective optical system according to this comparative example is an apparatus for fixing an objective optical system unit 302 in an aligned state to a site A of a subject under examination, such as an internal organ of an animal, and, as shown in Fig. 28 and Fig. 29, is provided with a support member 303 for supporting the objective optical system unit 302 and a fixing mechanism 304 for holding the support member 303 in an aligned and fixed state with respect to an arm or a leg X of the animal.

In the example shown in Fig. 28 and Fig. 29, the support member 303 is a tube-shaped member having a through-hole 305 in which the arm or leg X of the animal is inserted, and an insertion hole 306 for inserting the objective optical system unit 302 and threaded holes 307, disposed at both sides in the longitudinal direction thereof, are provided at substantially the central position in the length direction thereof, through a side wall. Also, fastened bolts 308 whose ends can protrude inside the through-hole 305 are disposed in the threaded holes 307. Thus the fixing mechanism 304 for fixing the support member 303 in an aligned state with respect to the tissue X is constituted by the through-hole 305, the threaded holes 307, and the bolts 308.

The objective optical system unit 302 is arranged so as to contain an objective optical system 310 formed of a plurality of lenses 309 inside a substantially circular outer tube 311. The outer tube 311 is provided with a step portion 312 at an intermediate position in the longitudinal direction thereof, and is also provided with a small-diameter section 313 whose outer diameter at the side towards the tip from the step portion 312 is reduced stepwise, and a large-diameter section 314 at the rear end whose outer diameter is larger than the small-diameter section 313.

The insertion hole 306 is provided with fitting faces 315a and 315b against which the small-diameter section 313 and the large-diameter section 314 of the outer tube 311 in the objective optical system unit 302 fit. In addition, it is also provided with an abutting face 316 against which the step portion 312 provided in the outer tube 311 abuts.

Reference number 317 in the drawings is the main body of the microscope. An optical fiber 317a for conveying light from a light source (not shown), a collimator lens 317b for making the light emitted from the optical fiber 317a substantially parallel, and an optical scanner 317c, like a galvano mirror, for scanning the parallel light beam emitted from the collimator lens 317b over the examination site A are provided in the microscope main body 317.

The effects of the fixing apparatus 301 according to the present comparative example, when configured in this way, are described below.

Fig. 28 depicts the case where an examination of the bone marrow, serving as the site A of the subject under examination, is carried out. To fix the objective optical system unit 302 using the fixing apparatus 301 according to this comparative example, the tissue of the animal, for example, the skin tissue and the muscle tissue of the arm or leg X, is cut open, thus forming a hole extending to the bone marrow A in the bone B. In this state, the arm or leg X is inserted into the through-hole 305 of the support member 303, and the insertion hole 306 is aligned with the incised region.

Then, the objective optical system unit 302 is inserted through the insertion hole 306 into an incision Y in the tissue X, and the tip of the objective optical system unit 302 is disposed so as to be in contact with the bone marrow A. Subsequently, in this state, the support member 303 is fixed with respect to the arm or leg X of the animal by tightening the bolts 308 screwed into the threaded holes 307 of the support member 303.

In other words, since the support member 303 is fixed to the arm or leg X of the animal and the objective optical system unit 302 is disposed in the support member 303 in an aligned state, it is possible to fix, in an aligned state, the tip of the objective optical system unit 302 with respect to the bone marrow A, which is the site of the subject under examination disposed inside the arm or the leg X of the animal.

According to the fixing apparatus 301 of this comparative example, since an abutting face 316, against which the step portion 312 of the objective optical system unit 302 abuts, is provided in the support member 303, it is possible to position the objective optical unit 302, in the optical axis direction thereof, with respect to the support member 303. Also, since the fitting faces 315a and 315b, against which the small-diameter section 313 and the large-diameter section 314 of the objective optical system unit 302 fit, are provided in the support member 303, the objective optical system unit 302 can be disposed in an aligned state, in the radial direction thereof, with respect to the support member 303.

Thus, since it is possible to position the objective optical system unit 302 with respect to the support member, in the optical axis direction and in the direction perpendicular thereto, even if the objective optical system unit 302 is removed from and inserted into the insertion hole 306, the tip can be positioned with a high degree of repeatability at the same position of the bone marrow A.

Next, a fixing apparatus 320 of an objective optical system according to a tenth comparative example not forming part of the present invention will be described with reference to Fgs. 30 to 32. In the description of this comparative example, identical reference numerals are used where the description and structure overlap with the above-described ninth comparative example, and the description thereof is thus omitted.

The fixing apparatus 320 according to this comparative example is provided with a support member 321 having an insertion hole 306 similar to the insertion hole 306 of the fixing apparatus 301 according to the above-described comparative example, and a fixing mechanism 322 provided on the support member 321.

An abutting face 316 against which fitting faces 315a and 315b (not shown in the drawings) abut is provided in the insertion hole 306.

Also, the fixing mechanism 322 is constituted, as shown in Fig. 30 for example, by clamping members 324 which are urged shut by springs 323.

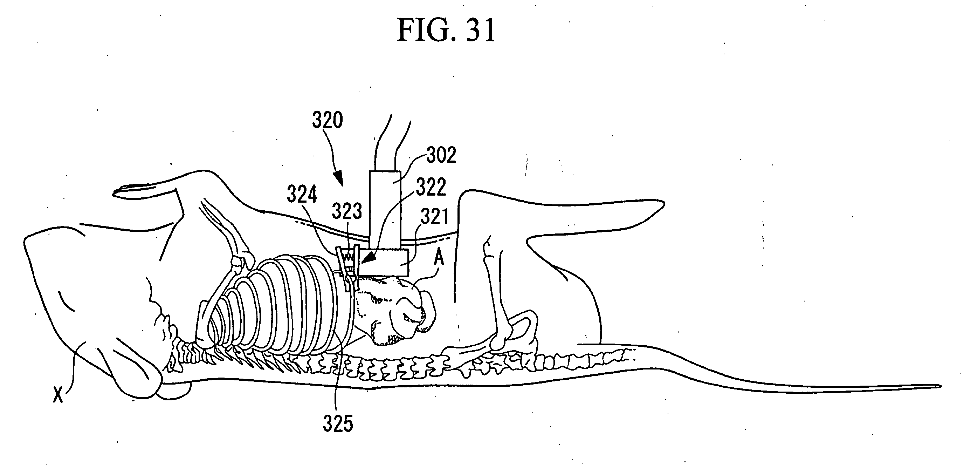

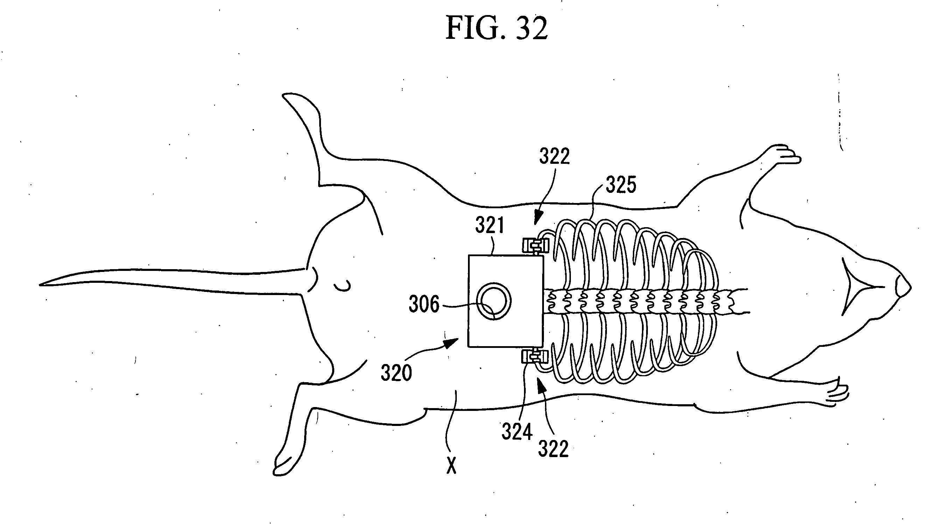

As shown in Fig. 31 and Fig. 32, the fixing device 320 according to this comparative example is implanted inside a small experimental animal X, and is fixed inside by the fixing mechanism 322. By clamping the clamping members 324 of the fixing mechanism 322 to a bone 325 of the small experimental animal X, the support member 321 becomes fixed to the bone 325.

The bone 325, such as a rib, is deformed little due to its comparative rigidity and also has a relative positional relationship with respect to the tissue, such as an organ, thus providing a certain degree of stability. Accordingly, by fixing the support member 321 to this bone 325, it is possible to maintain the objective optical system unit 302, which is positioned and fixed with respect to the support member 321, in a stable aligned state with respect to the examination site A of the subject.

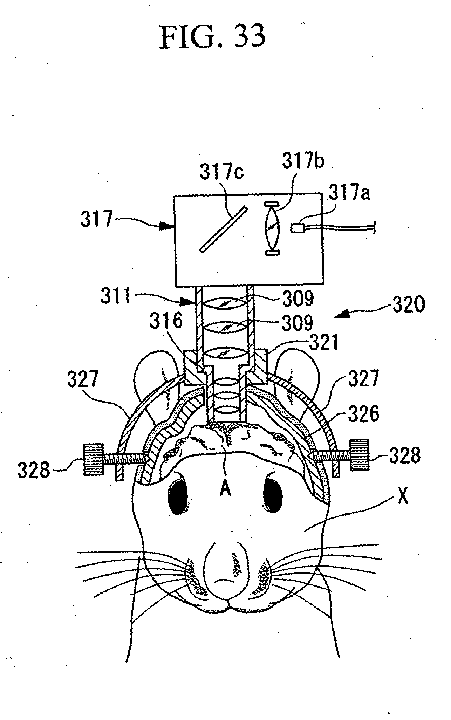

The fixing device 320 according to this comparative example is not limited to devices for fixing to the bone 325 shown in Figs. 30 to 32. For example, in the case where the examination site A of the subject is brain tissue disposed inside a cranium 326, as shown in Fig. 33, by clamping the cranium 326 in the radial direction with bolts 328 provided at the ends of arc-shaped members 327, which are clamped to the head X of the small experimental animal, the support member 321, which is fixed to the arc-shaped members 327, may be positioned and fixed with respect to the tissue X.

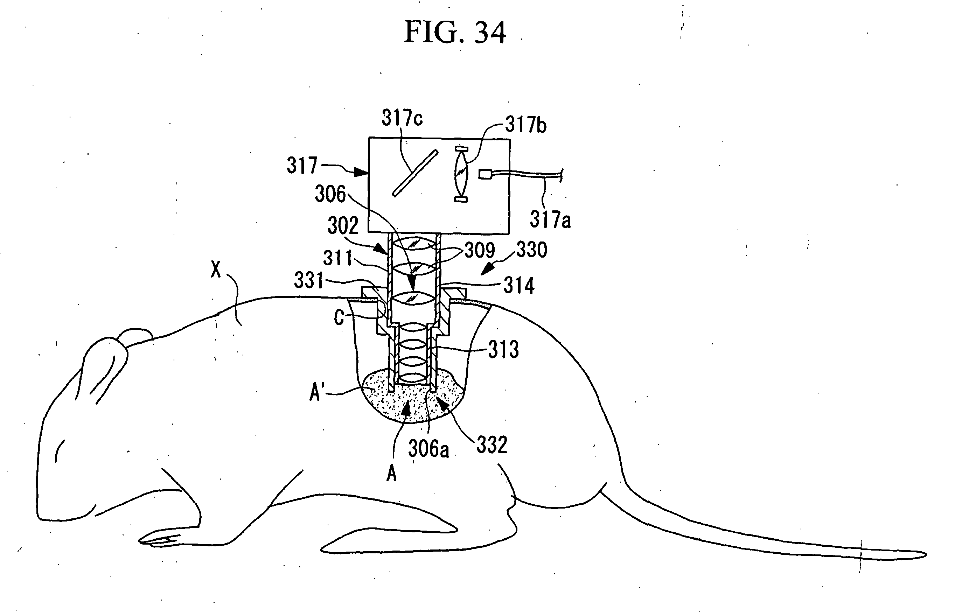

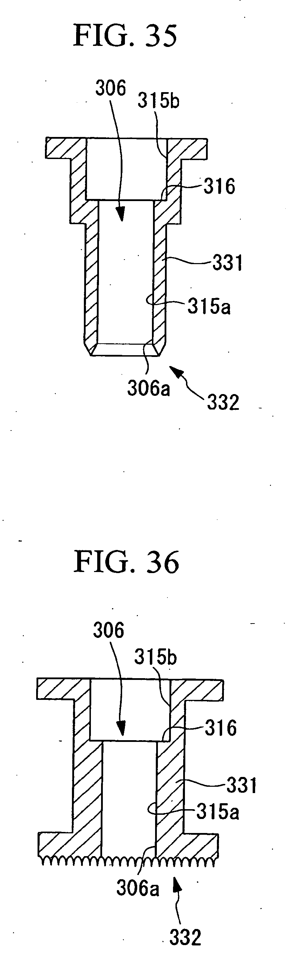

Next, an objective optical system fixing device according to an eleventh comparative example not forming part of the present invention is described with reference to Fig. 34 and Fig. 35.

In the description of this comparative example, identical reference numerals are used where the description and structure overlap with the above-described ninth comparative example, and the description thereof is thus omitted.

A fixing device 330 according to this comparative example is provided, at the end of a support member 331, with a fixing mechanism 332 for fixing the support member 331 with respect to tissue A'. As shown in Fig. 35, this fixing mechanism 332 is constituted by a circular-ring-shaped pointed portion (hereinafter occasionally referred to as a tip part 332) where the tip of the substantially cylindrical support member 331 is sharply formed. The fitting faces 315a and 315b, as well as the abutting face 316, for positioning the objective optical system unit 302 in the radial direction and in the axial direction are the same as in the fixing devices 301 and 320 according to the comparative examples described above.

To position and fix the end of the objective optical system unit 302 with respect to the subject examination site A, such as an organ, disposed inside a small experimental animal X or the like by means of the fixing device 330 according to this comparative example, the support member 331 is inserted inside an incision C formed through the skin tissue or muscle tissue of the small experimental animal X. Since the pointed portion 332 is provided at the end of the support member 331, by sticking the pointed portion 332 into the internal organ A', the support member 331 becomes fixed in the radial direction thereof with respect to the organ A'.

Since the insertion hole 306 of the support member 331 is formed inside the circular-ring-shaped pointed portion 332 and the tip of the objective optical system unit 302 is exposed at an opening 306a thereof, it is possible to examine the subject examination site A that is disposed inside the pointed portion 332 via the objective optical system unit 302.

In the fixing device 330 according to this comparative example, the circular-ring-shaped pointed portion 332 is employed as a fixing mechanism; however, as shown in Fig. 36, a plurality of micro needles 332 may be provided at the tip surface of the support member 331. In this case, little damage is caused to the tissue such as the organ A' into which the micro needles 332 are stuck, and it is possible to maintain the support member 331 in a stable aligned state with respect to the tissue A' disposed around the examination site A of the subject.

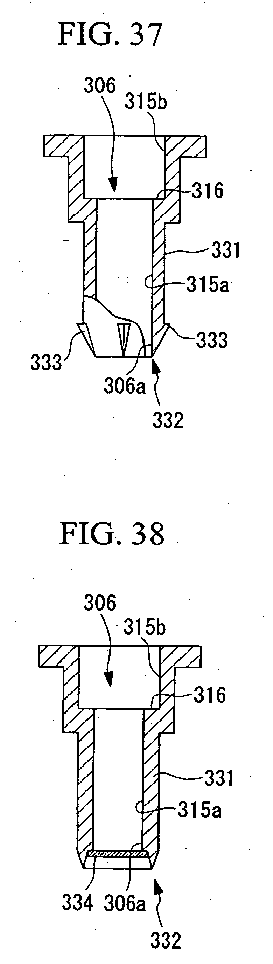

Moreover, as shown in Fig. 37, a reverse part 333 formed of a plurality of projections protruding in the radial direction may be provided around the pointed portion 332. With such an arrangement, once the pointed portion 332 of the support member is thrust into the organ A', the reverse part 333 provided around the pointed portion 332 becomes lodged in the organ A', thus preventing the support member 331 from being removed from the organ A'. As a result, since the support member 331 is fixed to the organ A' not only in the radial direction thereof but also in the axial direction, the objective optical system unit 302 can be fixed to the subject examination site A in a stable aligned state in both the radial direction and the axial direction.

Furthermore, as shown in Fig. 38, it is also possible to provide a window member 334, formed of an optically transparent material, for blocking an opening 306a disposed inside the pointed portion 332 of the support member 331 in Fig. 35. When the support member 331 having such a structure is inserted into an incision C formed in the tissue X and is stuck into the organ A' or the like in the vicinity of the examination site A of the subject, the support member 331 is disposed so as to cover the inner surface of the incision C formed in the tissue X and so that the window member 334 comes into close contact with the subject examination site A and covers the subject examination site A. As a result, even if the objective optical system unit 302 is removed from the insertion hole 306 of the support member 331, the interior of the tissue X is covered so as not to be exposed to the air, and the tissue X can thus be maintained in a healthy condition.

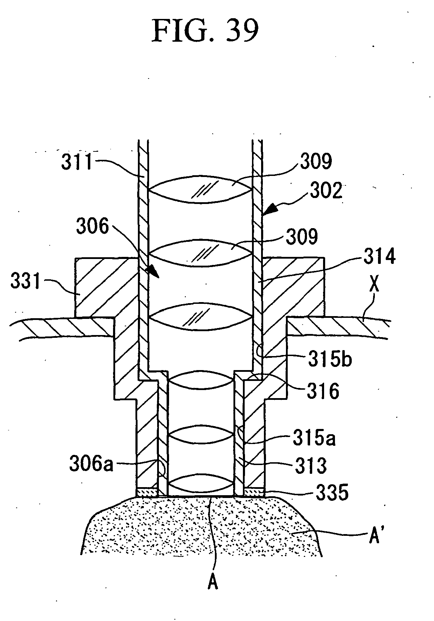

In addition, in the comparative examples described above, the pointed portion 332 for sticking into the tissue such as the organ A' is provided at the tip of the support member 331, which fixes the support member 331 to the tissue in an aligned state; however, instead of this, as shown in Fig. 39, a biocompatible adhesive 335 may be applied to the tip surface of the support member 331. Accordingly, instead of sticking the support member 331 into the tissue A' such as an organ, it is possible to fix it in an aligned state to the tissue A' in the vicinity of the examination site A of the subject. This is preferable because it can be aligned and fixed without causing a significant amount of damage to the tissue A'. As examples of the adhesive 335, a silane coupling agent, a thermo-responsive polymer, and other biocompatible adhesives are possible.

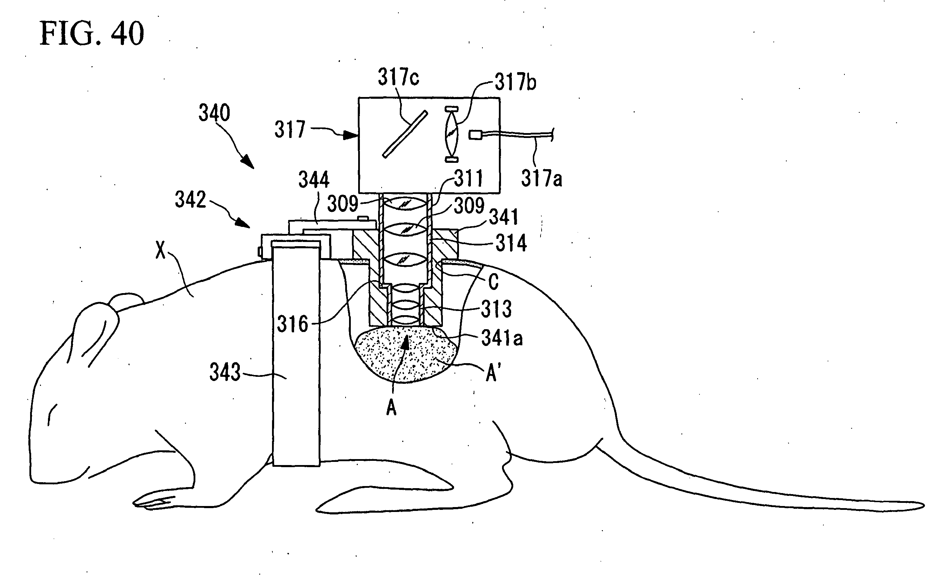

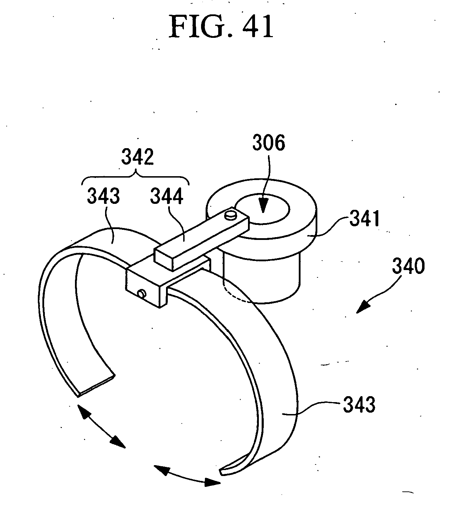

Next, an objective optical system fixing device according to a twelfth comparative example not forming part of the present invention is described with reference to Fig. 40 and Fig. 41. In the description of this comparative example, the same reference numerals are used where the description and structure overlap those of the eleventh comparative example described above, and the description thereof is omitted.

A fixing device 340 according to this comparative example is provided with a support member 341 which is inserted into an incision C formed in the torso of a small experimental animal X or the like, and a fastening apparatus 342 for fastening the support member 341 to the torso (the surface of the body) of the small experimental animal X.

The support member 341 may be provided with a pointed portion 332 or an adhesive 335 at the tip thereof, like the support member 331 in the eleventh comparative example, or, as shown in Fig. 40, it may also be provided with a flat tip surface 341a.

As shown in Fig. 40 and Fig. 31, the fastening apparatus 342 is formed of two metallic arc-shaped flat gripping parts 343 which are urged in the closing direction by a spring or the like (not shown), and a coupling member 344 for coupling the gripping parts 343 and the support member 341.

By inserting the torso of the small experimental animal between the arc-shaped flat gripping parts 343 constituting the fastening apparatus, which are pushed apart by the resilient force of the spring, and gripping the torso by means of the resilient force of the spring, the gripping parts 342 can be fastened to the torso of the small experimental animal X.

According to the thus-configured fixing device 340 of this comparative example, by fastening the fastening apparatus 342 to the torso of the small experimental animal X, the support member 341 and the objective optical system unit 302 inserted in the support member 341 can be fixed in an aligned state with respect to the examination site A of the subject. In particular, this is effective in cases where the support member 341 cannot be fixed to a bone or to the organ A' itself. Also, even if the support member 341 is fixed to a bone or the organ A' itself, by employing the fastening apparatus 342 of this comparative example, the objective optical system unit 302 can be maintained in a more stable aligned state with respect to the examination site A of the subject.

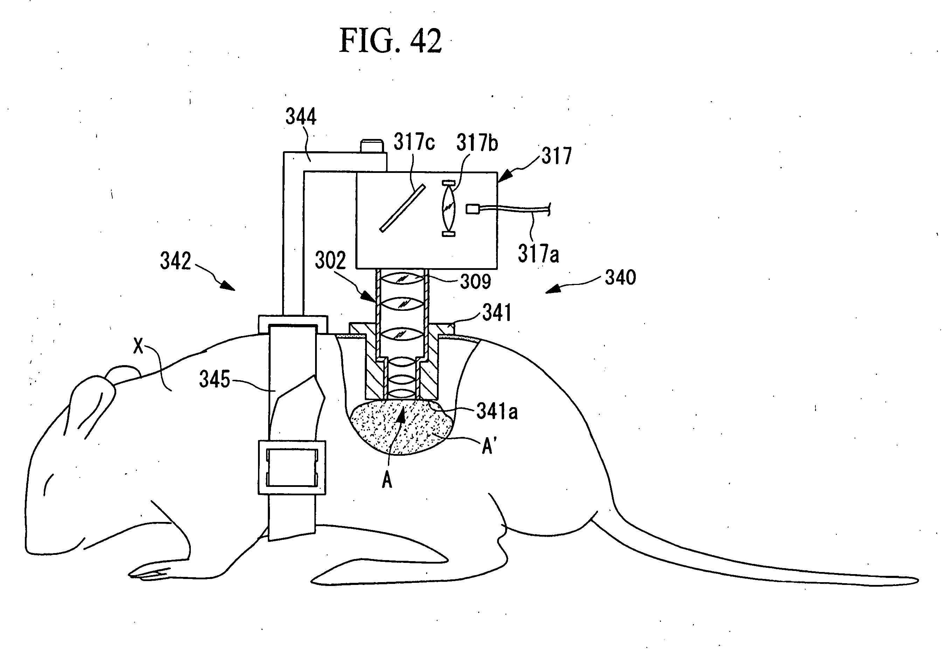

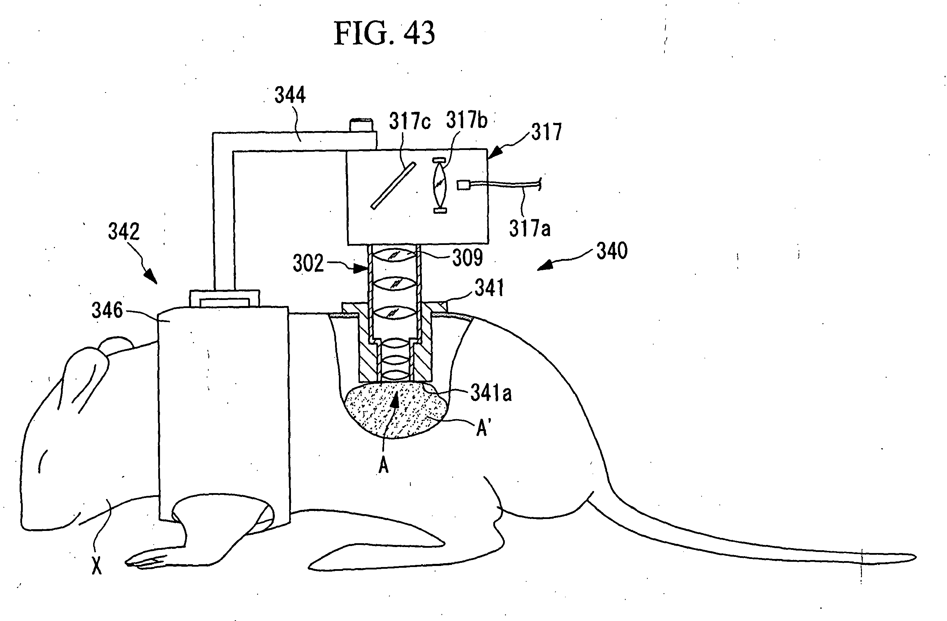

This comparative example has been described in terms of an example base member having a structure in which the torso of the small experimental animal X is gripped by the metallic arc-shaped flat gripping parts 343; however, instead of this, the base member may be constituted by, as shown in Fig. 42, a belt 345 for strapping around the torso or, as shown in Fig. 43, a jacket 346 worn by the small experimental animal X. According to these base members 345 and 346, no serious damage is caused to any small experimental animal X, and the objective optical system unit 302 can be fixed with respect to the examination site A of the subject. Also, it is possible allow the small experimental animal to behave as normal, and examination of the examination site A of the subject can be carried out over a long period of time.

Since the base member formed of the arc-shaped flat gripping members 343 or the belt 345 can be adjusted to fit the size of the small experimental animal X, it is versatile and can be used for various purposes.

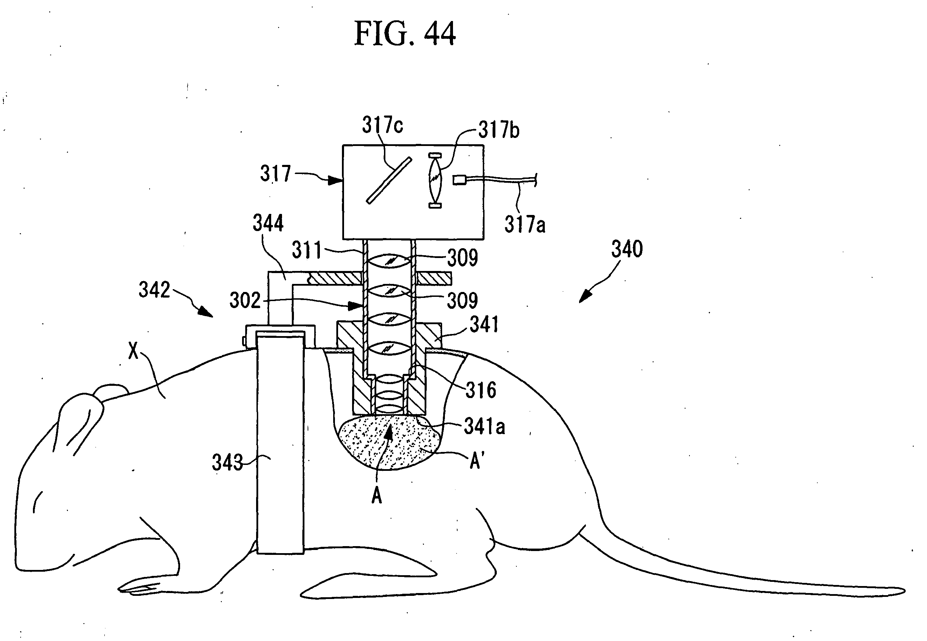

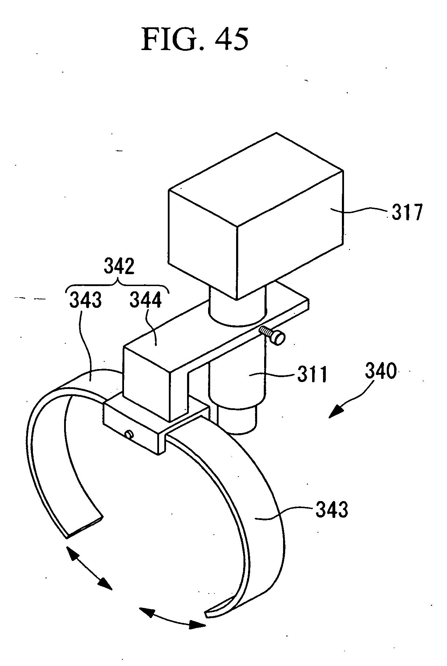

In this comparative example, coupling and fixing of the base member 343 and the support member 341 is achieved by the coupling member 343; however, instead of this, as shown in Fig. 42 and Fig. 43, coupling and fixing of the base members 345 and 346 and the microscope 317 may be achieved by a coupling member 344. Also, as shown in Fig. 44 and Fig. 45, coupling and fixing of the base member 311 and an outer tube 311 of the objective optical system unit 302 inserted in the support member may be achieved by the coupling member 344. With this structure, since the objective optical system unit 302 is supported at two places, that is, at the support member 341 and at the coupling member 344, more stable examination of the examination site A of the subject can be carried out.

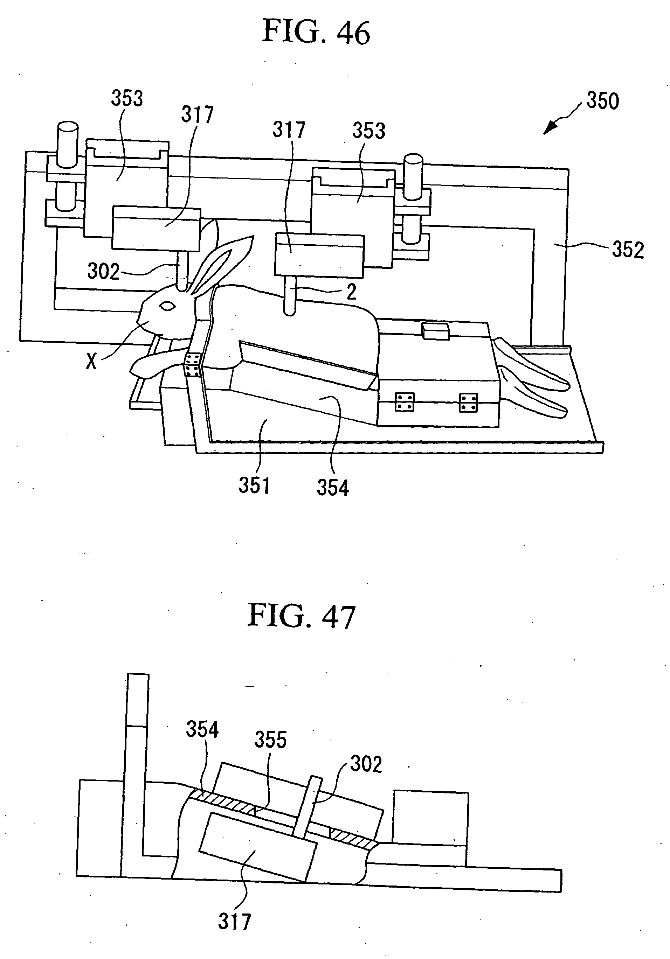

Next, an objective optical system fixing device according to a thirteenth comparative example not forming part of the present invention is described with reference to Fig. 46 and Fig. 47. In this comparative example too, the same reference numerals are used where the description and structure overlap those of the ninth comparative example described above, and the description thereof is omitted.

As shown in Fig. 46, a fixing device 350 of this comparative example is provided with an animal securing stage 351 for securing a small experimental animal X, an arm 352 fixed to the animal securing stage 351, and sliders 353 that can move on the arm 352 in the horizontal direction and the vertical direction. A microscope body 317 having an objective optical system 302 is fixed to each slider 353.

Also, as shown in Fig. 47, a through-hole 355 is provided in a mounting part 354 on which the small experimental animal X is placed, and another objective optical system unit 302 is fixed in an aligned state with respect to the animal securing stage 351 so as to project through the upper face of the mounting part 354 via the through-hole 355.

In the example shown in Fig. 46 and Fig. 47, the tips of the objective optical system units 302, which are positioned in the horizontal direction and the vertical direction by operating the sliders 353, are disposed so as to be inserted in holes formed in the head and back of the small experimental animal X, which is secured with the mounting part 354 of the animal fixing stage 351 facing the abdominal region. Also, the tip of the objective optical system unit 302 protruding from beneath the mounting part 354 is disposed so at to be inserted in a hole formed in the abdominal region.

According to the fixing device 350 of this comparative example, the objective optical system units 302, which are positioned and fixed with respect to the animal securing stage 351 on which the small experimental animal X is secured either directly or by means of the arm 350 and the sliders 350, are used to carry out examination of subject examination sites disposed inside the body of the small experimental animal X. Therefore, as a result, relative motion between the objective optical system units 302 and the examination sites of the subject can be reduced as much as possible, and detailed, blur-free examination images can be obtained.

In the comparative examples above, the objective optical system units 302 have been described in terms of an example in which at least one objective lens 309 is contained inside the outer tube 311; however, instead of this, the objective optical system units 302 may have a configuration in which a probe-type microscope head is aligned and fixed with respect to the support members 303, 321, 331, and 341.

## Claims

1. An objective lens unit (23, 63) for an optical microscope (5) and adapted for in vivo examination of a living subject (W), wherein the objective lens unit (23, 63) is configured so as to hold at least one lens (42) in a frame part (41) and the objective lens unit (23, 63) comprises on the frame part (41):
a contact surface (46, 50) adapted to make close contact with the subject (W) under examination; and
a fixing device for fixing the frame part (41) to the subject (W) under examination at an examination site, wherein the fixing device comprises a suction apparatus for applying suction to the subject (W) under examination to fix the frame part (41) at the examination site;
**characterized in that** the frame part (41) comprises a substantially circular inner frame (44) for holding said at least one lens (42) and an outer frame (49) around the inner frame (44) which forms a cavity (51, 70) between the outer frame (49) and the inner frame (44) through which the suction apparatus applies suction to the subject (W) under examination.

2. An objective lens unit (23) according to claim 1, wherein the outer frame (49) of the suction apparatus comprises a cylinder having an opening in the contact surface (46, 50), and wherein the suction apparatus comprises a piston (52) slidably fitted to the cylinder.

3. An objective lens unit (63) according to claim 1, wherein the cavity (70) of the suction apparatus comprises a concave section having an opening (71) in the contact surface (46, 50), and at least one part of the outer frame (49) enclosing the concave section is formed of a resilient member (69).

4. A microscope (5) comprising:
an objective lens unit (23, 63) according to one of claims 1 to 3;
a light source (26) for radiating light onto the subject (W) under examination; and
a photo-detector (27) for detecting light obtained from light radiated from the light source (26) onto the subject (W) under examination.

5. A microscope system (1) comprising:
a multi-axis motion mechanism (22);
a microscope (5) according to claim 4, which is attached to the multi-axis motion mechanism (22);
a stage (3) on which the subject (W) under examination is mounted; and
a stereo microscope (4) which is disposed above the stage (3),
wherein the microscope (5) is freely movable with respect to the stage (3).

## Patentansprüche

1. Objektivlinseneinheit (23, 63) für ein optisches Mikroskop (5) und ausgeführt zur *in-vivo*-Untersuchung eines lebenden Objektes (W), wobei die Objektivlinseneinheit (23, 63) so konfiguriert ist, dass sie mindestens eine Linse (42) in einem Fassungsteil (41) hält, und die Objektivlinseneinheit (23, 63) am Fassungsteil (41) aufweist:
eine Kontaktoberfläche (46, 50), die so ausgeführt ist, dass sie einen engen Kontakt mit dem Untersuchungsobjekt (W) herstellt; und
ein Fixierungsgerät zum Fixieren des Fassungsteils (41) am Untersuchungsobjekt (W) am Untersuchungsort, wobei das Fixierungsgerät eine Saugvorrichtung aufweist, um das Untersuchungsobjekt (W) mit einer Saugwirkung zu beaufschlagen, damit das Fassungsteil (41) am Untersuchungsort fixiert wird;
**dadurch gekennzeichnet, dass** das Fassungsteil (41) eine im Wesentlichen kreisförmige innere Fassung (44) zum Halten der mindestens einen Linse (42) und eine äußere Fassung (49) um die innere Fassung (44) aufweist, die einen Hohlraum (51, 70) zwischen der äußeren Fassung (49) und der inneren Fassung (44) bildet, durch den die Saugvorrichtung das Untersuchungsobjekt (W) mit einer Saugwirkung beaufschlagt.

2. Objektivlinseneinheit (23) nach Anspruch 1, bei der die äußere Fassung (49) der Saugvorrichtung einen Zylinder mit einer Öffnung in der Kontaktoberfläche (46, 50) aufweist, und bei der die Saugvorrichtung einen Kolben (52), der verschieblich im Zylinder sitzt, aufweist.

3. Objektivlinseneinheit (63) nach Anspruch 1, bei der der Hohlraum (70) der Saugvorrichtung einen konkaven Abschnitt mit einer Öffnung (71) in der Kontaktoberfläche (46, 50) aufweist und mindestens ein Teil der den konkaven Abschnitt umgebenden äußeren Fassung (49) aus einem elastischen Element (69) gebildet ist.

4. Mikroskop (5), aufweisend:
eine Objektivlinseneinheit (23, 63) nach einem der Ansprüche 1 bis 3;
eine Lichtquelle (26) zum Abstrahlen von Licht auf das Untersuchungsobjekt (W); und
einen Fotodetektor (27) zur Detektion von Licht, das von dem von der Lichtquelle (26) auf das Untersuchungsobjekt (W) abgestrahlten Licht erhalten wird.

5. Mikroskopsystem (1), aufweisend:
einen Mechanismus (22) zur Bewegung in mehreren Achsen;
ein Mikroskop (5) nach Anspruch 4, das am Mechanismus (22) zur Bewegung in mehreren Achsen angebracht ist;
einen Objekttisch (3) auf dem das Untersuchungsobjekt (W) angeordnet ist; und
ein Stereomikroskop (4), das über dem Objekttisch (3) angeordnet ist,
wobei das Mikroskop (5) bezüglich des Objekttisches (3) frei beweglich ist.

## Revendications

1. Unité de lentille d'objectif (23, 63) pour un microscope optique (5) et adaptée pour un examen in vivo d'un sujet vivant (W), dans laquelle l'unité de lentille d'objectif (23, 63) est configurée de manière à maintenir au moins une lentille (42) dans une partie de châssis (41) et l'unité de lentille d'objectif (23, 63) comprend sur la partie de châssis (41) :
une surface de contact (46, 50) adaptée pour faire un contact étroit avec le sujet (W) en cours d'examen ; et
un dispositif de fixation pour fixer la partie de châssis (41) au sujet (W) en cours d'examen au niveau d'un site d'examen, dans lequel le dispositif de fixation comprend un appareil d'aspiration pour appliquer une aspiration au sujet (W) en cours d'examen pour fixer la partie de châssis (41) au niveau du site d'examen ;
**caractérisée en ce que** la partie de châssis (41) comprend un châssis intérieur (44) substantiellement circulaire pour maintenir ladite au moins une lentille (42) et un châssis extérieur (49) autour du châssis intérieur (44) qui forme une cavité (51, 70) entre le châssis extérieur (49) et le châssis intérieur (44) à travers laquelle l'appareil d'aspiration applique une aspiration au sujet (W) en cours d'examen.

2. Unité de lentille d'objectif (23) selon la revendication 1, dans laquelle le châssis extérieur (49) de l'appareil d'aspiration comprend un cylindre ayant une ouverture dans la surface de contact (46, 50), et dans laquelle l'appareil d'aspiration comprend un piston (52) monté de façon coulissante sur le cylindre.

3. Unité de lentille d'objectif (63) selon la revendication 1, dans laquelle la cavité (70) de l'appareil d'aspiration comprend une section concave ayant une ouverture (71) dans la surface de contact (46, 50), et au moins une partie du châssis extérieur (49) enveloppant la section concave est constituée d'un élément résilient (69).

4. Microscope (5) comprenant :
une unité de lentille d'objectif (23, 63) selon l'une des revendications 1 à 3 ;
une source de lumière (26) pour envoyer de la lumière sur un sujet (W) en cours d'examen ; et
un photodétecteur (27) pour détecter la lumière obtenue de la lumière envoyée de la source de lumière (26) sur le sujet (W) en cours d'examen.

5. Système de microscope (1) comprenant :
un mécanisme de mouvement multiaxial (22) ;
un microscope (5) selon la revendication 4, qui est fixé sur le mécanisme de mouvement multiaxial (22) ;
un étage (3) sur lequel le sujet (W) en cours d'examen est monté ; et
un microscope stéréoscopique (4) qui est disposé au dessus de l'étage (3), dans lequel le microscope (5) est librement mobile par rapport à l'étage (3).
